# EUROPEAN PATENT SPECIFICATION

(11) **EP 2 244 496 B1**
(45) Date of publication and mention of the grant of the patent: **05.04.2017**
(21) Application number: 09702099.4
(22) Date of filing: 07.01.2009
(51) Int. Cl.: H04W 12/06, H04W 88/08

(54) **WIRELESS ACCESS SYSTEM, WIRELESS ACCESS METHOD, AND ACCESS POINT DEVICE**
DRAHTLOSZUGANGSSYSTEM, DRAHTLOSZUGANGSVERFAHREN UND ZUGANGSPUNKTVORRICHTUNG
SYSTÈME D'ACCÈS SANS FIL, PROCÉDÉ D'ACCÈS SANS FIL ET DISPOSITIF DE POINT D'ACCÈS

(30) Priority: 18.01.2008 JP 2008008840
(43) Date of publication of application: 27.10.2010
(73) Proprietor: NEC Corporation, Minato-ku Tokyo 108-8001 (JP)
(72) Inventor: ANDO, Takeshi, Tokyo 108-8001 (JP)
(74) Representative: MacDougall, Alan John Shaw
(86) International application number: PCT/JP2009/050403
(87) International publication number: WO 2009/090968

(56) References cited:
- JP-A- 2004 222 002
- JP-A- 2006 180 481
- JP-A- 2006 352 371
- US-A1- 2004 054 798
- US-A1- 2005 148 368
- NTT DOCOMO: "Clarification of functions for self-optimization and self-configuration", 3RD GENERATION PARTNERSHIP PROJECT (3GPP); TECHNICAL SPECIFICATION GROUP (TSG) RADIO ACCESS NETWORK (RAN); WORKING GROUP 3 (WG3),, no. R3-061509, 13 October 2006 (2006-10-13), pages 1-3, XP002477484,

## Description

### TECHNICAL FIELD

The present invention relates to a wireless access system, a wireless access method and an access point apparatus.

### BACKGROUND ART

Mobile phones have been spreading remarkably, also their functions and services are being enriched increasingly, and a mobile phone has become a tool which is essential to daily life such as not only mailing and telephone but also internet access.

Communication common carriers that provide mobile phone service construct a mobile phone network based on the business needs in view of the profits. Therefore, there is a limit to expand installation sites for base stations which provide communication areas of mobile phones, and there exist still many so-called radio blind zone areas such as an area of radio dead angle due to buildings and landform, and an underground area in a building.

There is rising demands that individuals install own extraordinarily small mobile phone base station (femto cell base station) as a hot spot in an arbitrary place of such areas.

Further, a femto means "units per quadrillion", and a size of femto cell is about 30 meters of radius.

Moreover, in a macro cell, if the extraordinarily small mobile phone base station (femto cell base station) installed by an individual is made available for even general users, it is effective in the countermeasures for congestion in such a case that the difficulty of connecting is encountered due to so many numbers of simultaneous accesses.

Consideration and preparation of the standard specification for the femto cell is being advanced at present in 3GPP (Third Generation Partnership Project). On the other hand, future potential of a wireless LAN (Local Area Network) is expected greatly by IP (Internet Protocol) telephone and internet access. It is necessary to install many access points and continue to expand areas for spreading the wireless LAN.

However, there is a limit to expand areas because communication common carriers decide installation sites of access point for wireless LAN based on the business needs in view of the profits like a case of mobile phones.

Accordingly, expansion in hot spot areas established by individuals is expected, and business models and systems for it are being contrived.

A related art is described in Japanese Patent Application Laid-Open No. 2004-064536 (patent document 1).

In a wireless LAN system disclosed in the patent document 1, an access point in a hot spot area established by an individual, the owner and users as a member are registered with a server connected to an IP network. And when a user terminal sends a connection request via the access point, the server certifies the user terminal and the access point and permits bandwidth allocation to the access point at the time of authentication success. As a result, the user terminal can communicate with the other terminal using a bandwidth assigned at the access point.

In this way, in the wireless LAN, it is possible to establish a hot spot when an owner of the access point makes member registration in a server. Also, when performing member registration as a user of the member, it becomes possible to communication via the hot spot.

Technology of a wireless communication system which can use a personal base station installed by a user and a public base station installed by a communication common carrier mutually is described in Japanese Patent Application Laid-Open No. 2002-359881 (patent document 2).

A wireless communication system disclosed in the patent document 2 has a control station, which manages personal base stations installed by user and public base stations installed by communication common carrier, in a communication network provided by communication common carrier. The control station includes a radio resource database which performs allocation and management of radio resources, a server which certifies users and personal base stations installed by user and a router which establishes relay paths using personal base stations owned by user and public base stations.

In this wireless communication system, if a user who installed own personal base station has registered information on the user and the personal base station with a server, the user can perform communications using a public base station and a personal base station installed by the other user as well as own installed personal base station. In other words, only users who installed own personal base station form a specific user group. And when the user uses a public base station or a personal base station installed by the other user of the user group, it transmits authentication information which the user has registered in advance with a server and performs a communication using allocated radio resources when certified by the server.

Thus, even in mobile phone networks, by registering an authentication data of femto cell AP (Access Point) apparatus with an authentication server, a user can use a personal femto cell AP apparatus in a hot spot area established by the other user like a wireless LAN.

The environment to install a femto cell AP apparatus as an individual is being developed because ADSL (Asymmetric Digital Subscriber Line) and optic fiber networks are also spreading in the home at present.

And in the present day of expanding business globalization with a lot of opportunities of moving around, there is rising demands that individuals install access point apparatuses of such femto cell in a plurality of arbitrary locations.

R3-061509 is a proposal made by NTT Docomo to Working Group 3 of the Technical Specification Group Radio Access Network, dated 13 October 2006. The proposal is entitled "Clarification of functions for self-optimization and self-configuration" and discusses the way in which a new base station is configured at start-up. In particular, this proposal suggests that the base station obtains the address of an Operations And Management (OAM) server and contacts it to obtain information required to join the network. The base station is then authenticated by the operator network to prevent network piracy.

### DISCLOSURE OF THE INVENTION

### PROBLEM TO BE SOLVED BY THE INVENTION

However, the technology disclosed in the patent document 1 and the patent document 2 mentioned above has a problem that working efficiency of installing an access point apparatus is bad for arbitrarily installing access point apparatuses of femto cell 15 installed by individuals at a plurality of locations, and arbitrarily using.

Because, when individuals install access point apparatuses In a plurality of locations, a registration work for authentication data of each access point apparatus has to be performed with a server of communication common carrier whenever the access point apparatus is installed in the respective places, and a work of the registration procedure takes time and is troublesome.

The object of the present invention is to provide a wireless access system, a wireless access method and an access point apparatus with good working efficiency when individuals install access point apparatuses of femto cell in a plurality of locations.

### MEANS FOR SOLVING A PROBLEM

The present invention provides a wireless access system comprising: an authentication server; a first access point apparatus arranged to store authentication information that authenticates the first access point apparatus to the authentication server; and a second access point apparatus arranged: i) to access said first access point apparatus based on an address stored in advance, ii) to acquire and store said authentication information from said first access point apparatus, and iii) to transmit said authentication information to a network when requesting an authentication; wherein the authentication server is arranged to authenticate said second access point apparatus based on said authentication information received from said second access point apparatus via said network and based on authentication information of said first access point apparatus stored in advance in said authentication server.

The present invention also provides a wireless access method for wirelessly accessing an access point apparatus via a network comprising: storing in advance, in a second access point apparatus, an address of a first access point apparatus, which stores authentication information that authenticates the first access point apparatus to an authentication server; accessing, by said second access point apparatus, said first access point apparatus based on said address, acquiring and storing said authentication information from said first access point apparatus; transmitting, by said second access point apparatus when authenticating, said authentication information stored in said second access point apparatus to the authentication server; and authenticating, by said authentication server receiving said authentication information from said second access point apparatus via said network and storing in advance authentication information of said first access point apparatus, said second access point apparatus based on said received authentication information and said stored in advance authentication information of said first access point apparatus.

The present invention also provides an access point apparatus comprising: a storage unit, which stores authentication information that authenticates the access point to an authentication server; and an authentication information transmission unit, which transmits said authentication information stored in said storage unit, to other access point apparatus, in response to receiving an acquisition request from said other access point apparatus via a network.

### EFFECT OF THE INVENTION

The present invention has an effect in good working efficiency when individuals install access point apparatuses of femto cell in a plurality of locations.

### BRIEF DESCRIPTION OF THE DRAWINGS

Fig. 1 is a configuration diagram showing a first embodiment of wireless access system according to the present invention.
Fig. 2 is an operation flow chart of second access point apparatus in the first embodiment.
Fig. 3 is a block diagram showing a second embodiment of wireless access system according to the present invention.
Fig. 4 is a configuration diagram showing an example of a registered AP apparatus of the second embodiment.
Fig. 5 is a configuration diagram showing an example of a non-registered AP apparatus of the second embodiment.
Fig. 6 is a configuration diagram showing an example of an authentication server of the second embodiment.
Fig. 7 is a flow chart showing an example of operation of wireless access system of the second embodiment.
Fig. 8 is a block diagram showing a third embodiment of wireless access system according to the present invention.
Fig. 9 is a configuration diagram showing an example of a registered AP apparatus of the third embodiment.
Fig. 10 is a configuration diagram showing an example of a non-registered AP apparatus of the third embodiment.
Fig. 11 is a configuration diagram showing an example of an authentication server of the third embodiment.
Fig. 12 is a flow chart showing an example of operation of wireless access system of the third embodiment.
Fig. 13 is a block diagram showing a fourth embodiment of wireless access system according to the present invention.
Fig. 14 is a configuration diagram showing an example of a registered AP apparatus of the fourth embodiment.
Fig. 15 is a configuration diagram showing an example of a non-registered AP apparatus of the fourth embodiment.
Fig. 16 is a configuration diagram showing an example of an authentication server of the fourth embodiment.
Fig. 17 is a figure showing an example in a contract user table provided in an authentication server of the fourth embodiment.
Fig. 18 is a figure showing an example in an arbitrary setting table provided in an authentication server of the fourth embodiment.
Fig. 19 is a figure showing an example in a usage history table provided in an authentication server of the fourth embodiment.
Fig. 20 is a flow chart showing an example of operation , at the time of installing a registered AP apparatus of wireless access system of the fourth embodiment.
Fig. 21 is a flow chart showing an example of operation at the time of installing a non-registered AP apparatus of wireless access system of the fourth embodiment.
Fig. 22 is a flow chart showing an example of operation at the time of wireless access system of the fourth embodiment being in the operation status.

### BEST MODE FOR CARRYING OUT THE INVENTION

Next, embodiments of the present invention will be described in detail with reference to drawings.

### [First embodiment]

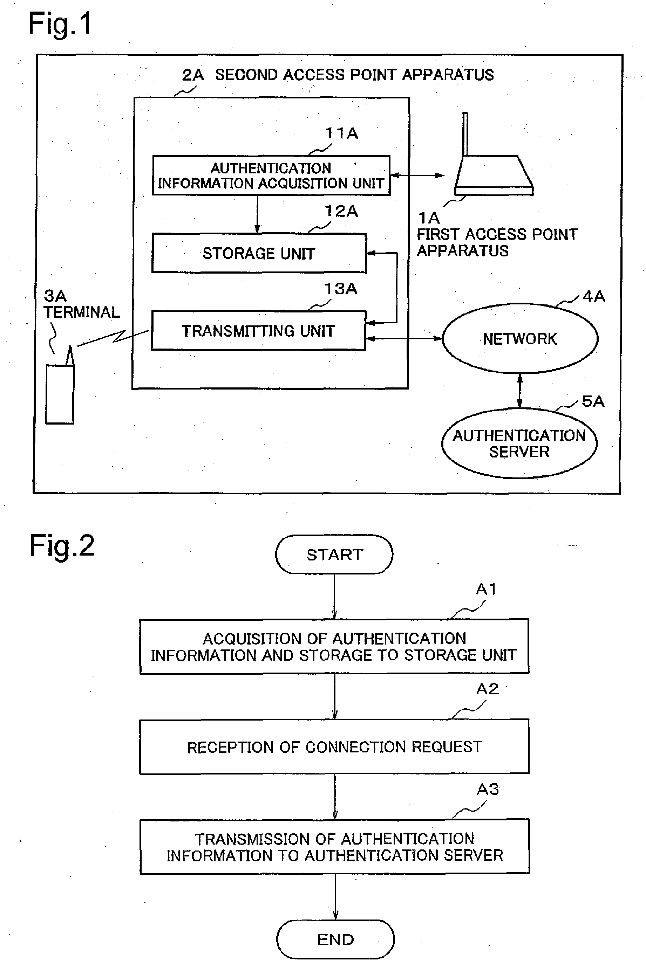

Fig. 1 is a configuration diagram showing the first embodiment of wireless access system according to the present invention.

Referring to Fig. 1, the wireless access system of this embodiment has a first access point apparatus 1A, a second access point apparatus 2A, a terminal 3A, a network 4A and an authentication server 5A.

The first access point apparatus 1A is an access point apparatus whose authentication information is registered with the authentication server 5A in advance.

The second access point apparatus 2A has interfaces with the first access point apparatus 1A and the terminal 3A and further, it also has an interface with the authentication server 5A via the network 4A.

The terminal 3A is a wireless mobile terminal such as a mobile phone and a PDA (Personal Data Assistant) or the like. The network 4A includes the internet and a backbone network of communication common carrier by ATM (Asynchronous Transfer Mode) system or the like. The authentication server 5A is an apparatus which certifies access point apparatuses.

Here, the second access point apparatus 2A has an authentication information acquisition unit 11A, a storage unit 12A and a transmitting unit 13A.

The authentication information acquisition unit 11A of the second access point apparatus 2A acquires authentication information for certifying oneself from the first access point apparatus 1A. Further, it is supposed that the authentication information acquisition unit 11A inputs an address (IP address, for example) of the first access point apparatus 1A in advance, for example, by operating an operation button (not shown) of the second access point apparatus 2A and stores.

Authentication information from the first access point apparatus 1A may be acquired via the network 4A or may be acquired directly by a wireless art from the first access point apparatus 1A, and it does not limit the method in this embodiment. Also, triggering of acquiring the authentication information may be performed by a command generated by operating an operation button (not shown) of the second access point apparatus 2A or it may be performed by a mechanism to acquire it automatically when connected to a network.

The storage unit 12A is an apparatus which stores acquired authentication information temporarily, and it includes, for example, an SRAM (Static Random Access Memory) whose contents do not disappear even if a power supply is removed or a RAM whose contents disappear when a power supply is removed, and they are selectively used depends on the needs.

The transmitting unit 13A transmits the authentication information stored in the storage unit 12A to the authentication server 5A via the network 4A when a "connection request" signal is received from the terminal 3A. This transmission is performed in order the authentication information stored in own storage unit 12A to be certified by the authentication server which is an Authentication Authority of a communication common carrier.

Further, according to this embodiment, the transmitting unit 13A receives the "connection request" signal from the terminal 3A, however, it may be configured that a controller (not shown) which controls the whole apparatus detects the "connection request" signal from the terminal, and then the controller starts the transmitting unit 13A taking that as a trigger.

Fig. 2 is an operation flow chart of the second access point apparatus 2A. The second access point apparatus 2A operates as follows.
(1) the authentication information acquisition unit 11A accesses the first access point apparatus 1A based on a destination address stored in advance, acquires authentication information from the first access point apparatus 1A and stores the acquired authentication information in the storage unit 12A (Step A1).
(2) the transmitting unit 13A receives the "connection request" signal from the terminal 3A (Step A2).
(3) the transmitting unit 13A transmits the authentication information stored in the storage unit 12A to the authentication server 5A via the network 4A when the "connection request" is received (Step A3).

After above-mentioned Step A3, the authentication server 5A carries out authentication processing to the second access point apparatus 2A based on the authentication information received via the network 4A from the second access point apparatus 2A and the authentication information of the first access point apparatus 1A memorized in advance. Specifically, both contents of authentication information are compared and if matching each other, authentication result information on authentication OK is outputted.

And the authentication result information is transmitted to the second access point apparatus 2A via the network 4A from the authentication server 5A. The second access point apparatus 2A reserves a bandwidth for the terminal 3A in case of authentication OK.

As it has been described above, the wireless access system of the first embodiment includes the first access point apparatus 1A storing authentication information, the second access point apparatus 2A and the authentication server 5A. And the second access point apparatus 2A acquires the authentication information from the first access point apparatus 1A and stores, and transmits the authentication information to the network 4A when a connection request is received from the terminal 3A. Further, the authentication server 5A carries out authentication processing to the second access point apparatus 2A based on the authentication information received via the network 4A from the second access point apparatus 2A and the authentication information of the first access point apparatus 1A memorized in advance.

Thus, if one access point apparatus (the first access point apparatus 1A) whose authentication information is registered with an authentication server is prepared, users do not need to perform a registration work of authentication data, because other access point apparatus (the second access point apparatus 2A) acquires the authentication information from the registered access point apparatus. According to this embodiment, the authentication server also does not need to newly register second authentication information, because the authentication information of the first access point apparatus which has already been registered is used at the time of authentication. Therefore, it has an effect in good working efficiency for installation work performed by users when individuals install access point apparatuses (the second access point apparatus 2A) of femto cell in a plurality of locations.

Also, as is understood from the above-mentioned descriptions, it has an effect that the second access point apparatus 2A of this embodiment can generalize its equipment configuration as the access point apparatus of femto cell.

This is because that it is not necessary for the access point apparatus of this embodiment to hold own authentication information in the initial state at the time of being installed, since it has a configuration which can acquire the authentication information of access point apparatus which is installed by individuals in other place.

### [Second embodiment]

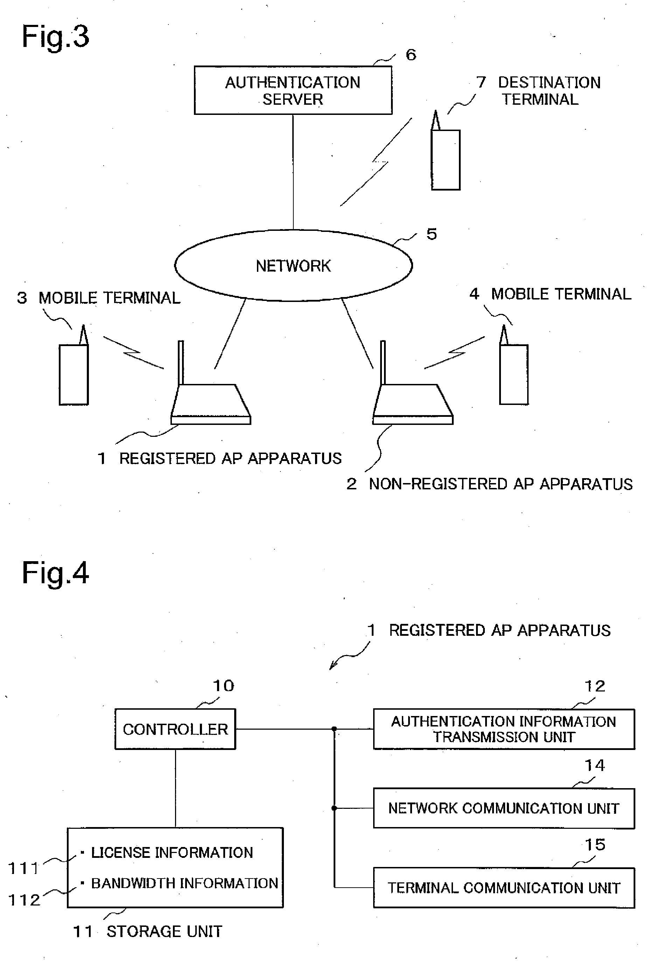

Next, the second embodiment of wireless access system according to the present invention will be described. Fig. 3 is a configuration diagram showing the second embodiment of wireless access system according to the present invention.

Referring to Fig. 3, this embodiment has a registered AP apparatus 1, a non-registered AP apparatus 2, a mobile terminal 3, a mobile terminal 4, a network 5, an authentication server 6 and a destination terminal 7.

Further, AP is an abbreviation of access point (Access Point).

Fig. 4, Fig. 5 and Fig. 6 are block diagrams showing each example of the registered AP apparatus 1, the non-registered AP apparatus 2 and the authentication server 6 respectively. Here, in a corresponding relationship with the first embodiment shown in Fig. 1, the registered AP apparatus 1 corresponds to the first access point apparatus 1A, the non-registered AP apparatus 2 corresponds to the second access point apparatus 2A and the authentication server 6 corresponds to the authentication server 5A respectively.

The registered AP apparatus 1 is an access point apparatus whose authentication information is registered with the authentication server 6 in advance.

As shown in Fig. 4, the registered AP apparatus 1 has a controller 10, a storage unit 11, an authentication information transmission unit 12, a network communication unit 14 and a terminal communication unit 15.

The controller 10 controls operation of the registered AP apparatus 1. That is, the controller 10 performs required processing by analyzing a received data received from outside via the network communication unit 14 and the terminal communication unit 15 mentioned later, or an input data from a command input unit of the apparatus which is not illustrated. The controller 10, for example, performs data transfer processing between the network communication unit 14 and the terminal communication unit 15 when recognizing a data transfer request as a result of the data analysis. As a result of the data analysis, the controller 10 also performs data storage processing to the storage unit 11 when recognizing a storage request to the storage unit 11, and performs data reading processing from the storage unit 11 when recognizing a reading request from the storage unit 11. Or, as a result of the data analysis, when recognizing necessity of execution of a function unit (authentication information transmission unit 12, for example) prepared in advance, the controller 10 starts a corresponding function unit and makes the function unit perform the function.

The storage unit 11 corresponds to "a second storage unit" which stores own authentication data, that is, license information 111 and bandwidth information 112 to be used.

The authentication information transmission unit 12 is started from the controller 10 when an authentication information request is received from the non-registered AP apparatus 2 and transmits the authentication information stored in the storage unit 11, that is, the license information 111 and the bandwidth information 112 to the non-registered AP apparatus 2. The license information is a certificate which shows that the registered AP apparatus 1 has contracted with a communication common carrier. Also, the bandwidth information is a frequency bandwidth which is assigned from a communication common carrier when the registered AP apparatus 1 has contracted with the communication common carrier.

The network communication unit 14 sends and receives data to or from a network. The terminal communication unit 15 sends and receives radio data to or from the mobile terminal 3.

The non-registered AP apparatus 2 is an access point apparatus whose authentication information is not registered in the authentication server 6.

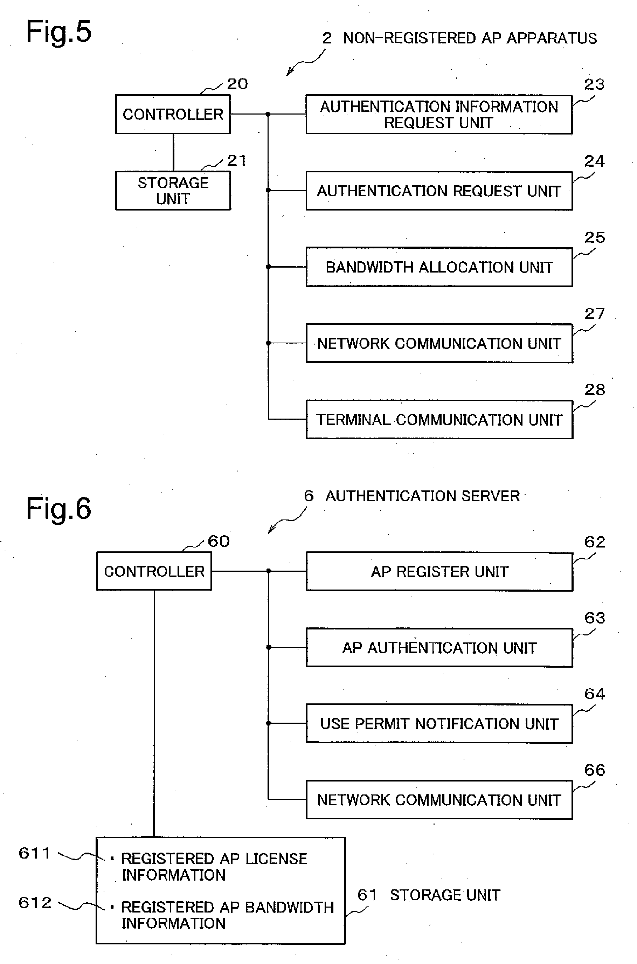

As shown in Fig. 5, the non-registered AP apparatus 2 has a controller 20, a storage unit 21, an authentication information request unit 23, an authentication request unit 24, a bandwidth allocation unit 25, a network communication unit 27 and a terminal communication unit 28.

The controller 20 controls the whole operation of the non-registered AP apparatus 2 like the controller 10 in the registered AP apparatus 1. The storage unit 21 corresponds to "a first storage unit" which stores an authentication data of the registered AP apparatus 1, that is, the license information and the bandwidth information.

The authentication information request unit 23 performs an acquisition request of authentication information of the registered AP apparatus 1 to the registered AP apparatus 1 via the network 5 and stores the acquired authentication information of the registered AP apparatus 1 in the storage unit 21. Further, it is supposed that the address (IP address, for example) of the registered AP apparatus 1 is given to the authentication information request unit 23 in advance by operating an operation button (not shown) of the non-registered AP apparatus 2, and is stored in the authentication information request unit 23.

This acquisition request, like the first embodiment, may be performed when the non-registered AP apparatus 2 is connected to a network, or may be performed by a command or the like given by operating an operation button (not shown) of the non-registered AP apparatus 2 after a network connection.

The authentication request unit 24 is started from the controller 20 when there is a connection request from the mobile terminal 4, and establishes a session to the authentication server 6, and transmits the license information and the bandwidth information stored in the storage unit 21 to the authentication server 6 as authentication information.

The bandwidth allocation unit 25 assigns a bandwidth stored in the storage unit 21 to the mobile terminal 4 when a use permit notification signal is received from the authentication server 6.

The network communication unit 27 sends and receives data to or from a network. The terminal communication unit 28 sends and receives radio data to or from the mobile terminal 4.

In Fig. 3 again, the mobile terminal 3 and the mobile terminal 4 are wireless mobile terminals such as a mobile phone and a PDA or the like. The network 5 includes the internet and a backbone network of communication common carrier by ATM (Asynchronous Transfer Mode) system or the like. The destination terminal 7 is a destination mobile terminal with which the mobile terminal 4 communicates.

Next, the authentication server 6 has a function to certify an access point apparatus, and has a controller 60, a storage unit 61, an AP register unit 62, an AP authentication unit 63 and a network communication unit 66 as shown in Fig. 6.

The controller 60 controls the whole operation of the authentication server 6. The AP register unit 62 registers authentication information of the registered AP apparatus 1, that is, license information and bandwidth information which can be released to the mobile terminal 3 of the registered AP apparatus 1 with the storage unit 61. The AP authentication unit 63 compares the authentication information sent from the non-registered AP apparatus 2, that is, the license information and the bandwidth information with the authentication information stored in the storage unit 61, and if they coincide with each other, authentication OK is determined. Information checked at the time of authentication is the registered AP apparatus license information 611 and the registered AP apparatus bandwidth information 612 in the storage unit 61.

The use permit notification unit 64 transmits use permit notification information for permitting bandwidth allocation to the mobile terminal 4 to the non-registered AP apparatus 2 via the session established by the non-registered AP apparatus 2, when the authentication OK is determined for the non-registered AP apparatus 2. The network communication unit 66 sends and receives data to or from a network.

Further, the authentication server may be a switching equipment in a network of mobile telephone service provider, or may be a different equipment connected with the switching equipment.

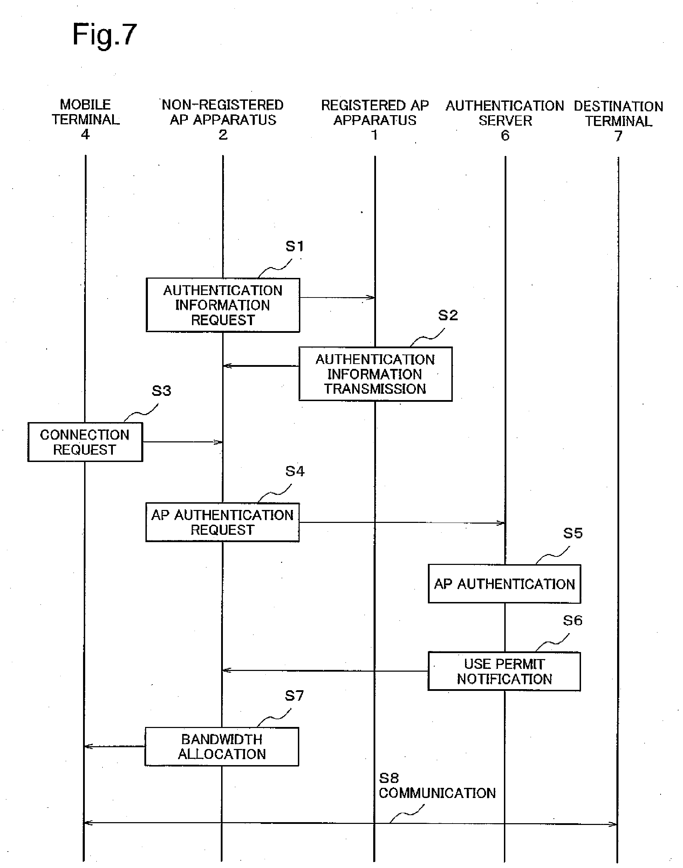

Next, an example of operation of wireless access system of this second embodiment will be described with reference to Fig. 7.

Further, it is supposed that the license information 611 and the bandwidth information 612 of the registered AP apparatus 1 which has contracted with a communication common carrier are registered in advance by the AP register unit 62 with the storage unit 61 of the authentication server 6.
(1): the authentication information request unit 23 of the non-registered AP apparatus 2 generates an acquisition request of authentication information of the registered AP apparatus 1, and transmits this acquisition request of authentication information to the registered AP apparatus 1 via the network communication unit 27 based on a destination address stored in advance (Step S1).
(2): the authentication information transmission unit 12 of the registered AP apparatus 1 transmits authentication information stored in the storage unit 11, that is, license information and bandwidth information to the non-registered AP apparatus 2 when an acquisition request of authentication information is received from the non-registered AP apparatus 2. The non-registered AP apparatus 2 stores the acquired authentication information of the registered AP apparatus 1 in the storage unit 21. (Step S2).
(3) : the mobile terminal 4 transmits a connection request to the non-registered AP apparatus 2 (Step S3).
(4) : the authentication request unit 24 of the non-registered AP apparatus 2 transmits the license information and the bandwidth information acquired from the registered AP apparatus 1 to the authentication server 6 as authentication request information via the network communication unit 27 when the connection request is received in the terminal communication unit 28 (Step S4).
(5): the AP authentication unit 63 of the authentication server 6 compares the authentication information (license information and bandwidth information) included in the received authentication request information with the authentication information stored in the storage unit 61 and confirms matching (Step S5).
(6): after matching confirmation, the use permit notification unit 64 of the authentication server 6 transmits use permit notification information to the non-registered AP apparatus 2 (Step S6).
(7) : when the use permit notification information is received, the bandwidth allocation unit 25 of the non-registered AP apparatus 2 assigns a bandwidth to the mobile terminal 4 (Step S7). This bandwidth is a bandwidth which is determined from the bandwidth information stored in the storage unit 21.
(8) : the mobile terminal 4 establishes a session to the destination terminal 7 using the notified bandwidth, and goes into a communicating state (Step S8).

As understood from the above-mentioned descriptions, this second embodiment has an effect in good working efficiency for installation work performed by users when individuals install access point apparatuses of femto cell in a plurality of locations.

This is because that users do not need to perform a registration work of authentication information of newly installed access point apparatus each time for registering the authentication information newly with the authentication server. That is because that the newly installed access point apparatus is provided with a constitution which acquires authentication information of access point apparatus whose authentication information is registered with an authentication server and accesses the authentication server using the authentication information.

In other words, according to this embodiment, the non-registered AP apparatus 2, which is corresponding to the second access point apparatus, includes the authentication information request unit 23 which transmits an acquisition request of authentication information to the registered AP apparatus 1, which is corresponding to the first access point apparatus, and a first storage unit (the storage unit 21) which stores the authentication information acquired by the acquisition request. Further, the non-registered AP apparatus 2 includes a transmitter unit (the authentication request unit 24 and the network communication unit 27) which transmits the authentication information stored in the first storage unit (the storage unit 21) to the authentication server 6 via the network 5 when there is a connection request from a terminal.

Accordingly, when the non-registered AP apparatus 2 is connected to the network 5, it is possible to acquire authentication information with almost fuss-free to users by operating only one button which results requesting authentication information to the registered AP apparatus 1.

It also has an advantage that the non-registered AP apparatus 2 can be easily certified by the authentication server 6, because the non-registered AP apparatus 2 can request authentication to the authentication server by the authentication information of the registered AP apparatus 1 when authentication is needed.

### [Third embodiment]

Next, the third embodiment of wireless access system according to the present invention will be described.

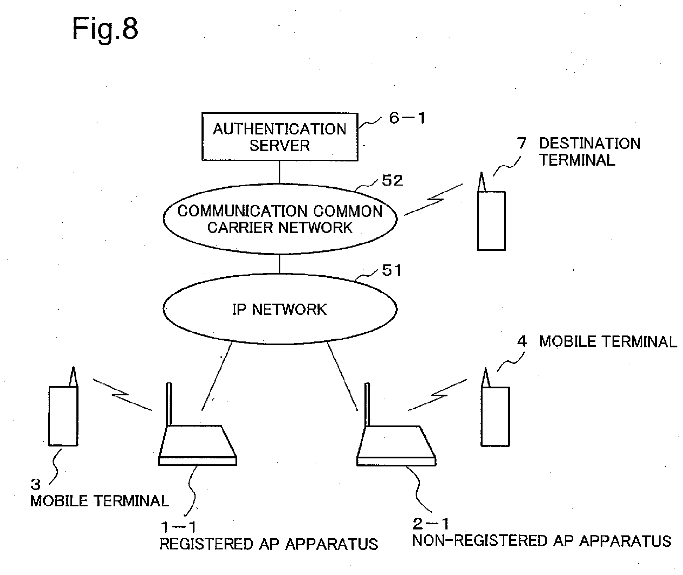

Fig. 8 is a configuration diagram showing the third embodiment of the present invention.

Referring to Fig. 8, this embodiment includes a registered AP apparatus 1-1, a non-registered AP apparatus 2-1, a mobile terminal 3, a mobile terminal 4, an IP network 51, a communication common carrier network 52, an authentication server 6-1 and a destination terminal 7.

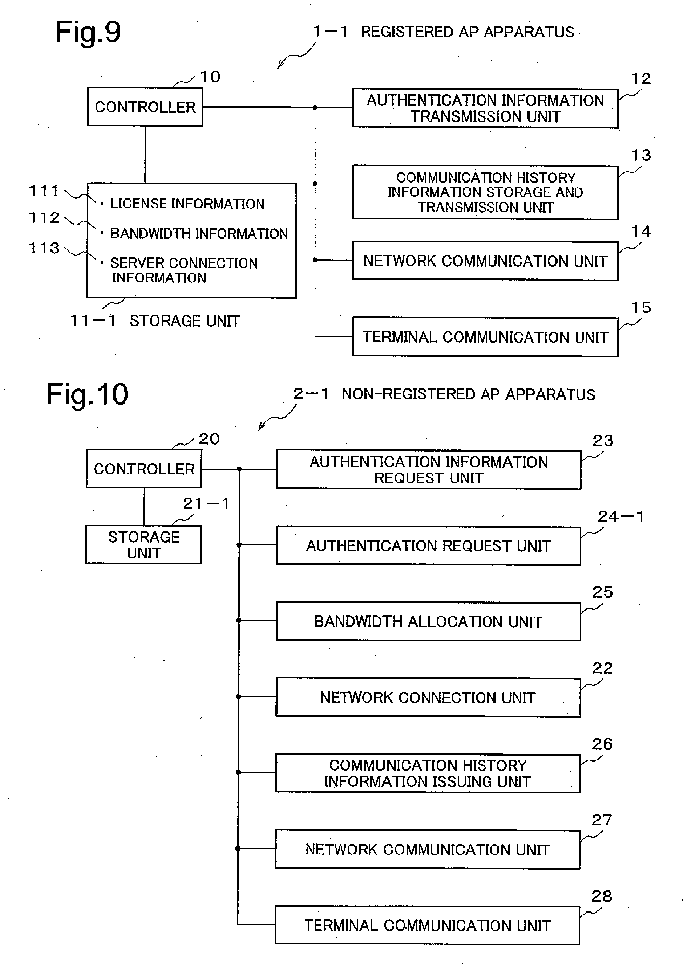

Fig. 9, Fig. 10 and Fig. 11 are block diagrams showing each example of the registered AP apparatus 1-1, the non-registered AP apparatus 2-1 and the authentication server 6-1 respectively.

Further, in Figs. 8-11, same reference number as the second embodiment is given to a function block which is identical with a function block in the second embodiment.

Here, in a corresponding relationship with the first embodiment shown in Fig. 1, the registered AP apparatus 1-1 corresponds to the first access point apparatus 1A, the non-registered AP apparatus 2-1 corresponds to the second access point apparatus 2A, and the authentication server 6-1 corresponds to the authentication server 5A respectively.

In Fig. 9, the registered AP apparatus 1-1 is an access point apparatus whose authentication information is registered with the authentication server 6-1 in advance. The registered AP apparatus 1-1 has a controller 10, a storage unit 11-1, an authentication information transmission unit 12, a communication history information storage and transmission unit 13 and a network communication unit 14 and a terminal communication unit 15.

Because the controller 10, the authentication information transmission unit 12, the network communication unit 14 and the terminal communication unit 15 are identical with respective function blocks in the second embodiment, the description will be omitted.

The storage unit 11-1 stores server connection information 113 which is the connection information to an authentication server in addition to own authentication data, that is, the license information 111 and the bandwidth information 112 to be used. This storage unit 11-1 corresponds to "the second storage unit". Further, the license information is a certificate which shows that the registered AP apparatus 1-1 is being contracted with a communication common carrier. Also, the bandwidth information is a frequency bandwidth assigned from a communication common carrier when it is contracted with the communication common carrier for the registered AP apparatus 1-1.

The communication history information storage and transmission unit 13 is started from the controller 10, and stores a bandwidth allocated to a mobile terminal and history information on allocation date and time as communication history information, and reports to the authentication server 6-1 at regular time intervals.

Next, the non-registered AP apparatus 2-1 is an access point apparatus whose authentication information is not registered with the authentication server 6 and corresponds to "the second access point apparatus". As shown in Fig. 10, the non-registered AP apparatus 2-1 has a controller 20, a storage unit 21-1, a network connection unit 22, an authentication information request unit 23, an authentication request unit 24-1, a bandwidth allocation unit 25, a communication history information issuing unit 26, a network communication unit 27 and a terminal communication unit 28.

Because the controller 20, the authentication information request unit 23, the network communication unit 27 and the terminal communication unit 28 are identical with respective function blocks in the second embodiment, the description will be omitted.

The storage unit 21-1 stores an authentication data of registered AP apparatus 1-1 acquired from the registered AP apparatus 1-1, that is, license information, bandwidth information and server connection information, and it corresponds to "the first storage unit".

When the non-registered AP apparatus 2-1 is connected to the internet of broadband, the network connection unit 22 starts the authentication information request unit 23 using a well-known DHCP (Dynamic Host Configuration Protocol). That is, according to this embodiment, when the non-registered AP apparatus 2-1 is connected to the internet, the authentication information request unit 23 is started automatically. Further, there are FTTH (Fiber To The Home) and ADSL (Asymmetric Digital Subscriber Line) or the like as a broadband circuit.

When there is a connection request from the mobile terminal 4, the authentication request unit 24-1 establishes a session to the authentication server 6-1 using the server connection information stored in the storage unit 21-1 and transmits the license information and the bandwidth information stored in this storage unit to the authentication server 6.

When use permit notification information is received from the authentication server 6-1, the bandwidth allocation unit 25 allocates a bandwidth stored in the storage unit 21-1 to the mobile terminal 4.

When the mobile terminal 4 has completed a call, the communication history information issuing unit 26 transmits bandwidth information having been used, that is, a bandwidth area and an airtime or the like as the communication history information to the registered AP apparatus 1-1.

In Fig. 8 again, the mobile terminals 3 and the mobile terminals 4 are wireless mobile terminals such as a mobile phone and a PDA or the like. The destination terminal 7 is a mobile terminal with which the mobile terminal 4 communicates. The network 51 is the internet. The communication common carrier network 52 is a network of communication common carrier which provides mobile phone service and includes a backbone network by ATM (Asynchronous Transfer Mode) system or the like.

The authentication server 6-1 has a usage fee calculation unit 65 in addition to equivalent functions to the authentication server 6 in the second embodiment.

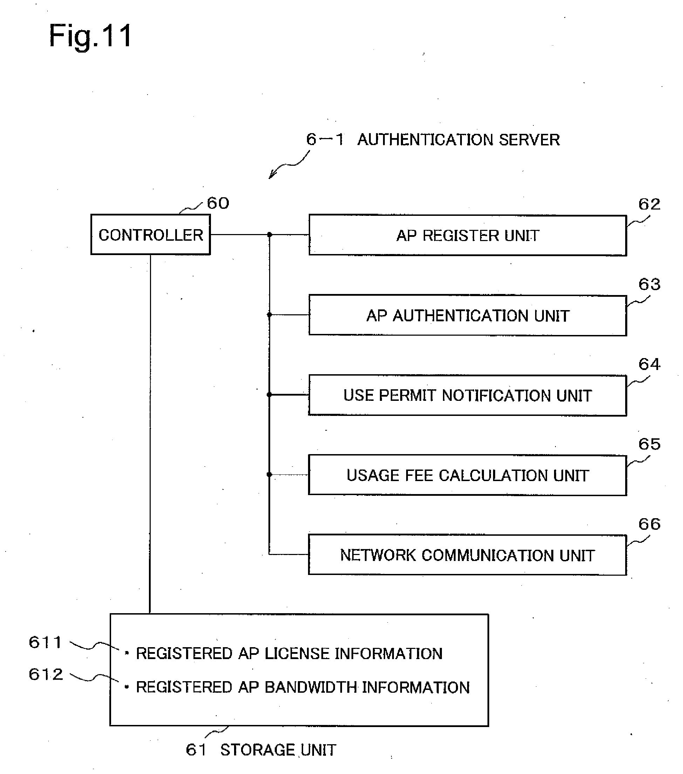

In Fig. 11, the usage fee calculation unit 65 calculates usage fee for a bandwidth of the registered AP apparatus 1-1 based on the communication history information which is sent periodically from the registered AP apparatus 1-1.

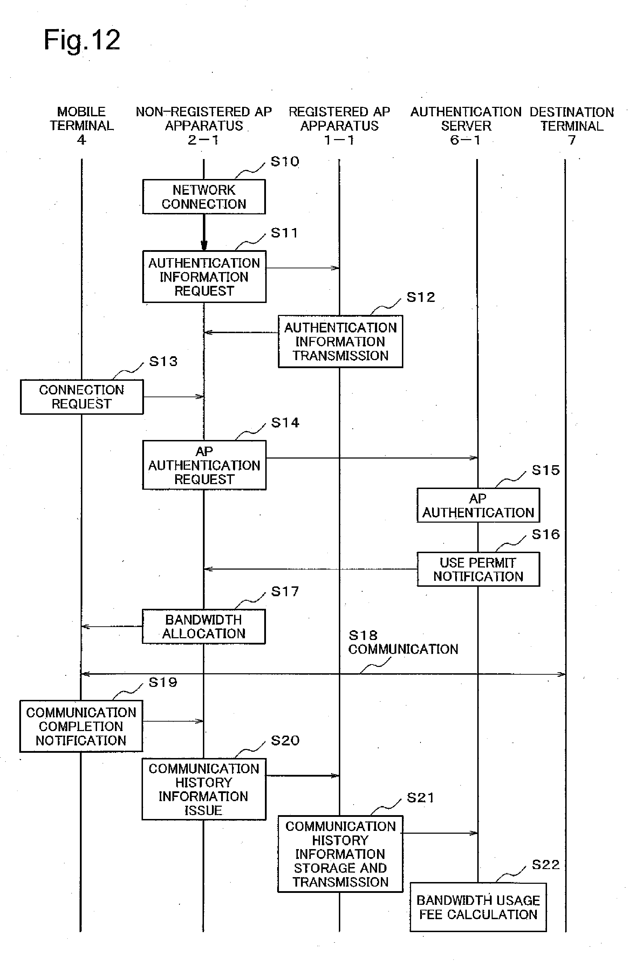

Next, an example of operation of this wireless access system will be described with reference to Fig. 12.

Further, it is supposed that the license information 611 and the bandwidth information 612 of the registered AP apparatus 1-1 which has contracted with communication common carrier are registered in advance by the AP register unit 62 with the storage unit 61 of authentication server 6-1.
(1): when the non-registered AP apparatus 2-1 is connected to the IP network 51, the network connection unit 22 of the non-registered AP apparatus 2-1 starts the authentication information request unit 23 (Step S10) .
(2): the authentication information request unit 23 of the non-registered AP apparatus 2-1 accesses the registered AP apparatus 1-1 for which an IP address has been stored in advance via the network communication unit 27 and the IP network 51 and performs acquisition request processing of authentication information of the registered AP apparatus 1-1 (Step S11).
(3): the authentication information transmission unit 12 of the registered AP apparatus 1-1 transmits the license information, the bandwidth information as authentication information and the server connection information which are stored in the storage units 11-1 to the non-registered AP apparatus 2-1. The non-registered AP apparatus 2-1 stores the acquired authentication information of the registered AP apparatus 1-1 and the acquired server connection information in the storage unit 21-1. (Step S12).
(4): the mobile terminal 4 transmits a connection request to the non-registered AP apparatus 2-1 (Step S13).
(5) : when the connection request is received in the terminal communication unit 28, the authentication request unit 24 of the non-registered AP apparatus 2-1 connects to the authentication server 6-1 using the server connection information acquired from the registered AP apparatus 1-1. And as authentication request data, the license information and the bandwidth information acquired from the registered AP apparatus 1-1 are transmitted to the authentication server 6-1 via the network communication unit 27 (Step S14).
(6): the AP authentication unit 63 of the authentication server 6-1 compares the authentication information sent from the non-registered AP apparatus 2-1 with the authentication information of the storage unit 61, and confirms matching (Step S15).
(7) : when an authentication result is affirmative, the use permit notification unit 64 of the authentication server 6-1 transmits use permit notification information to the non-registered AP apparatus 2-1 (Step S16).
(8): the bandwidth allocation unit 25 of the non-registered AP apparatus 2-1 allocates a bandwidth to the mobile terminal 4 when the use permit notification information is received (Step S17).
(9): the mobile terminal 4 establishes a session to the destination terminal 7 using the notified bandwidth, and goes into the communicating state (Step S18).
(10) : when the call has completed, the mobile terminal 4 notifies the terminal communication unit 28 of the non-registered AP apparatus 2-1 of completion of the call (Step S19).
(11): the communication history information issuing unit 26 of the non-registered AP apparatus 2-1 transmits history information such as a bandwidth area and an airtime or the like to the registered AP apparatus 1-1 as the communication history information based on the call completion(Step S20).
(12): the communication history information storage and transmission unit 13 of the registered AP apparatus 1-1 stores the communication history information received from the non-registered AP apparatus 2-1 and transmits to the authentication server 6-1 at regular time intervals (Step S21).
(13): the usage fee calculation unit 65 of the authentication server 6-1 calculates a band usage fee based on the communication history information transmitted from the registered AP apparatus 1-1 (Step S22).

As understood from the above-mentioned descriptions, this third embodiment has the effect that a personal femto cell can be installed in an arbitrary location. Because, it is provided with a network connection unit which has a function to automatically acquire authentication information of an access point apparatus, which is registered with an authentication server, when the access point apparatus of personal femto cell is connected to the internet at an arbitrary location.

And further, this third embodiment has an effect in good working efficiency for installation work performed by users when individuals install access point apparatuses of femto cell in a plurality of locations.

This is because that users do not need to perform registration work of authentication information of newly installed access point apparatus each time for registering the authentication information newly with the authentication server. That is because that the newly installed access point apparatus is provided with a constitution which acquires authentication information of an access point apparatus whose authentication information is registered with an authentication server and accesses the authentication server using the acquired authentication information when it performs authentication.

Moreover, this third embodiment has the effect that it can easily grasp the communication history of apparatus usage of the registered AP apparatus and the non-registered AP apparatus.

Because, it is provided with a constitution in which the non-registered AP apparatus issues communication history information including a bandwidth having been used to the registered AP apparatus whenever communication has completed, and the registered AP apparatus accumulates the communication history information and transmits to the authentication server at regular time intervals.

### [Fourth embodiment]

Next, the fourth embodiment of wireless access system according to the present invention will be described.

The fourth embodiment is different from the first embodiment to the third embodiment in a point including a constitution that installation is allowed after confirming the presence or absence of radio interference with other AP apparatus when installing the AP apparatus in an arbitrary place. In relation to the difference, it is also different from the first embodiment to the third embodiment in a point that it communicates with an authentication server at the time of installation.

In the third embodiment, it has a constitution that the communication usage history is forwarded to the registered AP apparatus from the non-registered AP apparatus, and the registered AP apparatus transmits to the authentication server periodically. However, in the fourth embodiment, it has a constitution that each of the non-registered AP apparatus and the registered AP apparatus notifies the authentication server of the usage history whenever a mobile terminal has completed communication. As a result, the processing load in the AP apparatus is able to be reduced than the third embodiment.

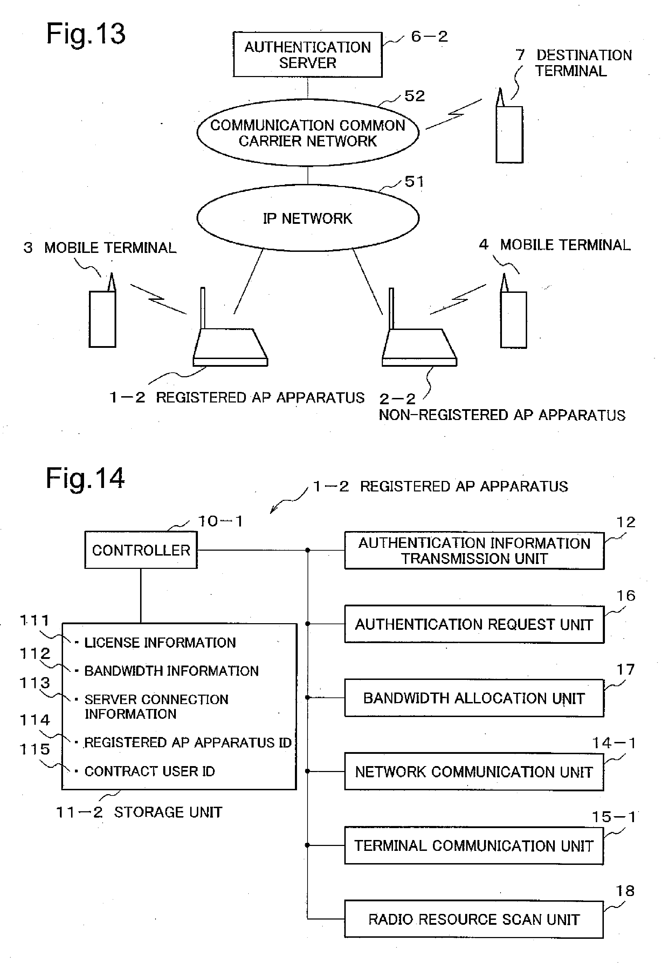

Fig. 13 is a configuration diagram showing the fourth embodiment of the present invention.

Referring to Fig. 13, this embodiment is constituted by including a registered AP apparatus 1-2, a non-registered AP apparatus 2-2, a mobile terminal 3, a mobile terminal 4, an IP network 51, a communication common carrier network 52, an authentication server 6-2 and a destination terminal 7.

Fig. 14, Fig. 15 and Fig. 16 are block diagrams showing each example of the registered AP apparatus 1-2, the non-registered AP apparatus 2-2 and the authentication server 6-2 respectively.

Further, in Figs. 14-16, same reference number as the third embodiment is given to a function block which is identical with a function block in the third embodiment.

Here, in a corresponding relationship with the first embodiment shown in Fig. 1, the registered AP apparatus 1-2 corresponds to the first access point apparatus 1A, the non-registered AP apparatus 2-2 corresponds to the second access point apparatus 2A and the authentication server 6-2 corresponds to the authentication server 5A respectively.

In Fig. 14, the registered AP apparatus 1-2 is an access point apparatus whose authentication information is registered with authentication server 6-2 in advance.

The registered AP apparatus 1-2 has a controller 10-1, a storage unit 11-2, an authentication information transmission unit 12, a network communication unit 14-1, a terminal communication unit 15-1, an authentication request unit 16, a bandwidth allocation unit 17 and a radio resource scan unit 18.

The controller 10-1 controls the whole operation of the registered AP apparatus 1-2. That is, the controller 10-1 performs required processing by analyzing a received data received from outside via the network communication unit 14-1 mentioned later, the terminal communication unit 15-1 and the radio resource scan unit 18 or an input data from a command input unit of the apparatus which is not illustrated. The controller 10-1, for example, performs data transfer processing between the network communication unit 14-1 and the terminal communication unit 15-1 when recognizing a data transfer request as a result of the data analysis. As a result of the data analysis, the controller 10-1 also performs data storage processing to the storage unit 11-2 when recognizing a storage request to the storage unit 11-2, and performs data reading processing from the storage unit 11-2 when recognizing a reading request from the storage unit 11-2. In other words, as a result of the data analysis, when recognizing necessity of execution of a function, unit prepared in advance, the controller 10-1 starts a corresponding function unit and makes the function unit perform the function.

The storage unit 11-2 stores server connection information 113 which is connection information to an authentication server, registered AP apparatus identification information (ID) 114 which is information to specify this registered AP apparatus and a contract user ID 115 which identifies a contract user who installs this registered AP apparatus in addition to own authentication data, that is, the license information 111 and the bandwidth information 112 to be used. This registered AP apparatus ID 114 is information which can distinguish the AP apparatus uniquely, and for example, a product number of the AP apparatus or MAC (Media Access Control) address or the like corresponds to this ID. The contract user ID 115 is information assigned by communication common carrier at the time of contract as mentioned later, and in this embodiment, identification information (terminal ID) of a mobile terminal which belongs to the contract user is assigned. Further, this storage unit 11-2 corresponds to "the second storage unit". The license information 111 is a certificate which shows that the registered AP apparatus 1-2 has contracted with the communication common carrier. The bandwidth information 112 is a frequency bandwidth which can be used in this registered AP apparatus 1-2 without radio interference with other AP apparatuses, and it is determined among a bandwidth assigned by communication common carrier when this registered AP apparatus 1-2 has contracted with the communication common carrier based on a radio wave state scan result mentioned later.

The authentication request unit 16 is started from the controller 10-1, and establishes a session to the authentication server 6-1 and transmits authentication information such as license information or the like stored in the storage unit 11-2 to the authentication server 6-1 for a certification registration. While under the operation status, it is started from the controller 10-1 at the time of connection request reception from a mobile terminal, and performs an authentication request for each communication to the authentication server 6-2.

The bandwidth allocation unit 17 allocates a bandwidth, which was specified with registration completion notification from the authentication server 6-2 and is being stored in the storage units 11-2, to the mobile terminal 4 when authentication completion notification (use permit notification) of each communication is received from the authentication server 6-2. As mentioned above, this bandwidth is a bandwidth having been determined no radio interference with other AP apparatuses.

The radio resource scan unit 18 is an apparatus which scans the reception condition (the receiving field intensity) of the transmitted radio waves from other AP apparatuses at the place where this AP apparatus is installed. As mentioned later, when the AP apparatus is installed, the radio resource scan unit 18 is started from the controller 10-1, scans the receiving field intensity of the radio waves of specified frequency bandwidth based on an instruction of the authentication server 6-2, and reports the result to the authentication server 6-2. In other words, the radio resource scan unit 18 is an apparatus which confirms the interference situation with radio waves used by other AP apparatuses installed near by.

The network communication unit 14-1 sends and receives data via a network including the internet and a communication common carrier network. The terminal communication unit 15-1 sends and receives radio data to or from the mobile terminal.

Next, the non-registered AP apparatus 2-2 is an access point apparatus installed in an arbitrary place separately after the registered AP apparatus 1-2 having been installed, and it corresponds to "the second access point apparatus".

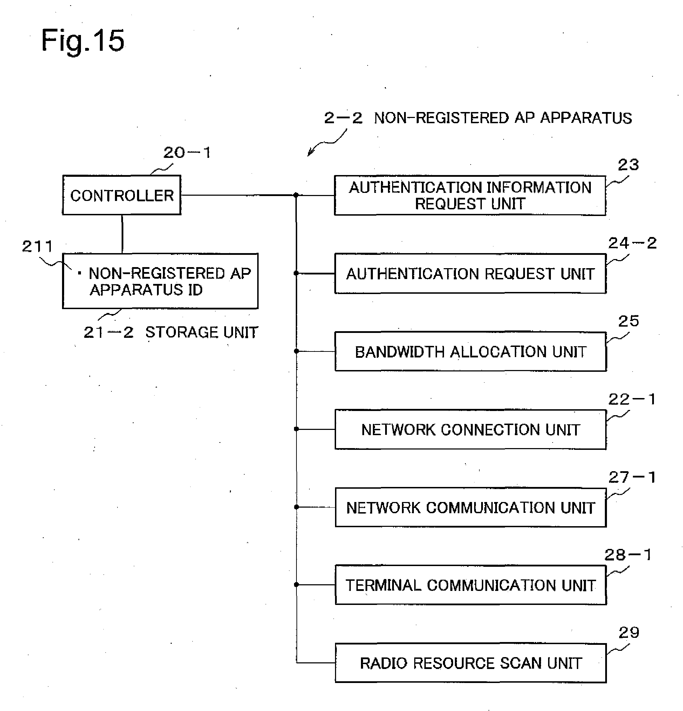

As shown in Fig. 15, the non-registered AP apparatus 2-2 has a controller 20-1, a storage unit 21-2, a network connection unit 22-1, an authentication information request unit 23, an authentication request unit 24-2, a bandwidth allocation unit 25, a network communication unit 27-1, a terminal communication unit 28-1 and a radio resource scan unit 29.

The controller 20-1 controls the whole operation of the non-registered AP apparatus 2-2 like the controller 10-1 in the registered AP apparatus 1-2.

The storage unit 21-2 corresponds to "the first storage unit" which stores authentication data of the registered AP apparatus 1-2 acquired from the registered AP apparatus 1-2. The storage unit 21-2 stores non-registration AP device identification information (ID) 211 which is information specifying this non-registration AP apparatus. This non-registered AP apparatus ID 211 is the information which can uniquely distinguish the non-registration AP apparatus, and for example, a product number of the AP apparatus or MAC (Media Access Control) address or the like corresponds to this ID.

When the non-registered AP apparatus 2-2 is connected to the internet of broadband, the network connection unit 22-1 starts the authentication information request unit 23 using a well-known DHCP (Dynamic Host Configuration Protocol). That is, according to this embodiment, when the non-registered AP apparatus 2-2 is connected to the internet, the authentication information request unit 23 is started automatically. Further, there are FTTH (Fiber To The Home) and ADSL (Asymmetric Digital Subscriber Line) or the like as a broadband circuit.

The authentication information request unit 23 performs an acquisition request of authentication information of the registered AP apparatus 1-2 to the registered AP apparatus 1-2 via the internet and stores the acquired authentication information of the registered AP apparatus 1-2 and server connection information in the storage unit 21-2. Further, it is supposed that the address (IP address, for example) of the registered AP apparatus 1-2 is given to the authentication information request unit 23 in advance by operating an operation button (not shown) of the non-registered AP apparatus 2-2, and is stored in the authentication information request unit 23.

In operation when installing this non-registered AP apparatus in an arbitrary place, as mentioned later, the authentication request unit 24-2 is started from the controller 20-1, and establishes a session to the authentication server 6-2 and transmits authentication information such as license information or the like and the non-registered AP apparatus ID 211 stored in the storage unit 21-2 to the authentication server 6-2 for a certification registration. While under the operation status, it is started from the controller 20-1 at the time of connection request reception from a mobile terminal, and performs an authentication request of each communication to the authentication server 6-2.

The bandwidth allocation unit 25 allocates a bandwidth, which was specified with registration completion notification from the authentication server 6-2 and is being stored in the storage unit 21-2, to the mobile terminal 4 when authentication completion notification (use permit notification) of each communication is received from the authentication server 6-2. A bandwidth stored in the storage unit 21-2 is a bandwidth which has been determined that there was no radio interference with other AP apparatuses at the place where this non-registered AP apparatus 2-2 is installed like a bandwidth stored in the storage unit 11-2 of the registered AP apparatus 1-2.

The network communication unit 27-1 sends and receives data via a network including the internet and a communication common carrier network. The terminal communication unit 28-1 sends and receives radio data to or from a mobile terminal.

The radio resource scan unit 29 is an apparatus which measures a radio interference situation at the place where this non-registered AP apparatus is installed like the radio resource scan unit 16 of the registered AP apparatus 1-2. As mentioned later, when the non-registered AP apparatus is installed, the radio resource scan unit 29 is started from the controller 10-1, scans the receiving field intensity of the radio waves of specified frequency bandwidth based on an instruction of the authentication server 6-2, and reports the result to the authentication server 6-2.

In Fig. 13 again, the mobile terminal 3 and the mobile terminal 4 are wireless mobile terminals such as a mobile phone and a PDA. The destination terminal 7 is a mobile terminal with which the mobile terminal 4 communicates. The network 51 is the internet. The communication common carrier network 52 is a network of communication common carrier which provides mobile phone service and includes a backbone network by ATM (Asynchronous Transfer Mode) system or the like.

The authentication server 6-2 has various management tables peculiar to the fourth embodiment mentioned later in addition to the similar function of authentication server 6-1 of the third embodiment.

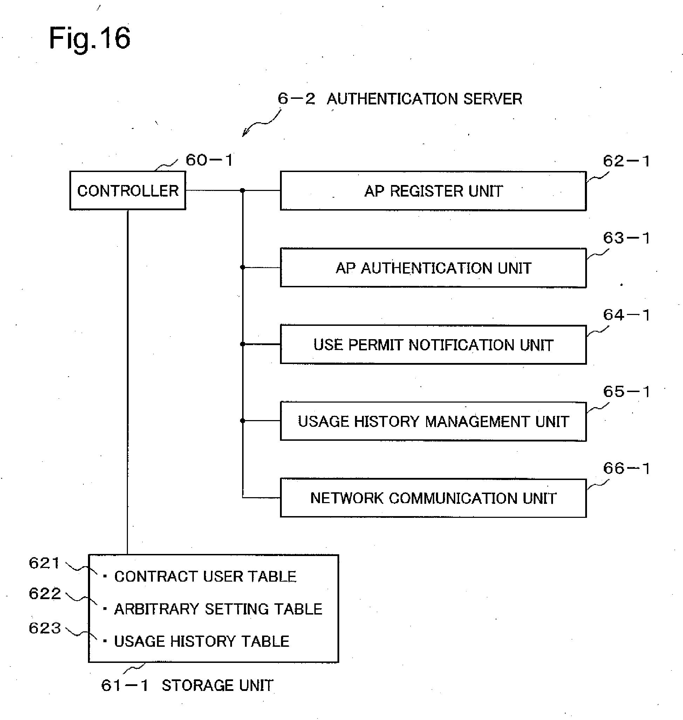

In Fig. 16, the authentication server 6-2 has a controller 60-1, a storage unit 61-1, an AP register unit 62-1, an AP authentication unit 63-1, a use permit notification unit 64-1, a usage history management unit 65-1 and a network communication unit 66-1.

The controller 60-1 controls the whole operation of the authentication server 6-2. The AP register unit 62-1 performs registration processing of the registered AP apparatus 1-2 and the non-registered AP apparatus 2-2, and stores necessary information in the storage unit 61-2.

The storage unit 61-2 stores a contract user table 621, an arbitrary installation table 622 and a usage history table 623 mentioned later.

The AP authentication unit 63-1 performs authentication processing of the registered AP apparatus 1-2 and the non-registered AP apparatus 2-2 based on information stored in the storage unit 61-2.

The use permit notification unit 64-1 transmits use permit notification for the mobile terminal 4 to the registered AP apparatus 1-2 or the non-registered AP apparatus 2 when authentication of a connection request from the mobile terminal 4 via the registered AP apparatus 1-2 or the non-registered AP apparatus 2-2 is certified.

The usage history management unit 65-1 accumulates and manages the communication history of the mobile terminal 4 via the registered AP apparatus 1-2 or the non-registered AP apparatus 2-2 on the usage history table 623 of the storage unit 61-2.

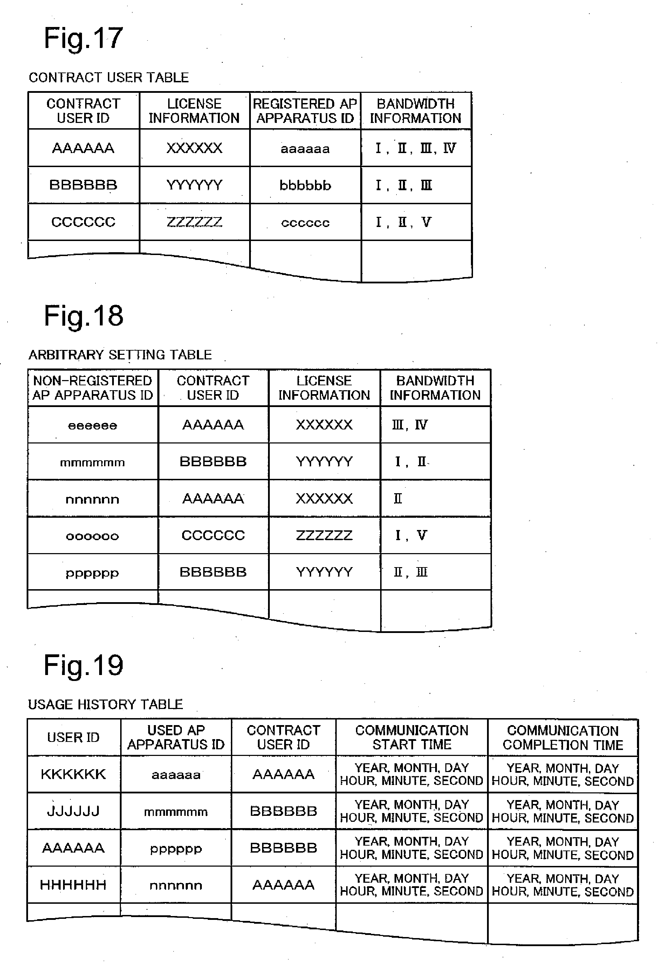

Each of examples of the contract user table 621, the arbitrary installation table 622 and the usage history table 623 stored in the storage unit 61-2 is shown in Figs. 17 to 19 respectively.

Fig. 17 is a figure showing an example of the contract user table 621 provided in the authentication server 6-2.

The contract user table 621 is a table in which various kinds of information about the registered AP apparatus 1-2 are set when the registered AP apparatus 1-2 is installed. This contract user table 621 is set based on information defined at the time of contract with the user when the first installation authentication operation (authentication registration) mentioned later is performed.

The information set in the table includes a contract user identification (ID) as identification information which can specify a contract user, license information required for authentication, a registered AP apparatus ID for specifying an AP apparatus to be installed and bandwidth information which can be used in this registered AP apparatus among the bandwidth information assigned at the time of contract.

The contract user ID is information which can uniquely distinguish the contract user and this information is assigned by communication common carrier at the time of contract. Usually, identification information (terminal ID) of a mobile terminal which belongs to the contract user is assigned and notified the contract user. The registered AP apparatus ID is information which can uniquely distinguish the registered AP apparatus, and a product number of the AP apparatus or MAC (Media Access Control) address or the like corresponds to this ID as mentioned above. As mentioned later, the bandwidth information is a frequency bandwidth which can be used in this registered AP apparatus and determined after confirming radio wave state being used by other AP apparatuses installed near by. Accordingly, it is not necessarily all bandwidth information assigned at the time of contract.

Fig. 18 is a figure showing an example of the arbitrary setting table 622 provided in the authentication server 6-2.

The arbitrary setting table 622 is a table which sets various kinds of information about the non-registered AP apparatus 2-2 when the non-registered AP apparatus 2-2 is installed at an arbitrary location after having installed the registered AP apparatus 1-2. This arbitrary setting table 622 is set at the time of an installation authentication operation (arbitrary registration) which is performed when installing the non-registered AP apparatus 2-2, as mentioned later.

The information to be set in this table includes a non-registered AP apparatus ID for specifying the installed non-registered AP apparatus, a contract user identification (ID) who has installed a registered AP apparatus from which license information is diverted, license information (license information diverted from a registered AP apparatus) required for authentication and a bandwidth information which can be used in the non-registered AP apparatus.

The non-registered AP apparatus ID is information which can uniquely distinguish this non-registered AP apparatus, and a product number of the AP apparatus or MAC (Media Access Control) address or the like corresponds to this ID as mentioned above. The contract user ID and the bandwidth information are information as previously described.

Fig. 19 is a figure showing an example of the usage history table 623 provided in the authentication server 6-2. The usage history table 623 is a table which accumulates the usage history of a registered AP apparatus and a non-registered AP apparatus used by mobile terminals for communication.

The information to be set in this table includes a user ID which is identification information for specifying a user of mobile terminal which has performed communication by a connection request, an AP apparatus ID (an apparatus ID for any one of registered AP apparatus ID and non-registered AP apparatus ID) of AP apparatus through which the mobile terminal has performed communication, a contract user ID which is identification information for specifying a contract user who installed the AP apparatus and airtime information of start time and end time of the communication.

The user ID is identification information (terminal ID) of a mobile terminal which the user has used, and it will be the same information as a contract user ID.when the contract user is the user.

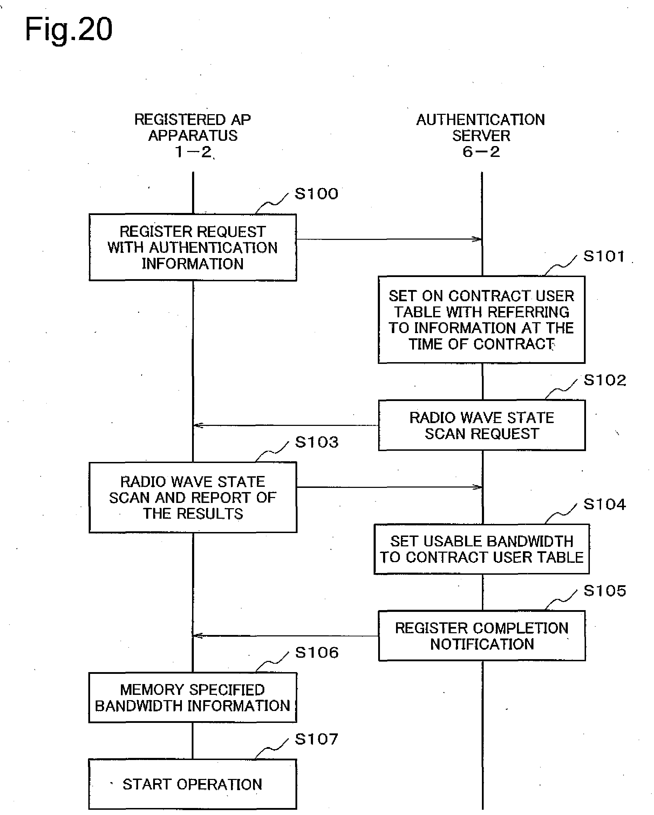

Next, an example of operation of wireless access system of the fourth embodiment will be described with reference to Figs. 20 to 22.

First, operation at the time of registered AP apparatus installation will be described with reference to Fig. 20. Fig. 20 is a flow chart showing an example of operation at the time of registered AP apparatus installation of wireless access system of the fourth embodiment.

As processing of a preliminary step for connecting a registered AP apparatus 1-2 to a network, a contract user registers license information notified by a communication common carrier at the time of contract and a contract user ID with the AP apparatus. As the contract user ID, identification information (terminal ID) of a mobile terminal which belongs to the contract user and declared to the communication common carrier at the time of contract is assigned. Registration operation is performed by connecting a PC (Personal Computer) to an external interface, which is not illustrated, of the registered AP apparatus 1-2 and inputting and registering necessary information using the AP apparatus registration application program. A method which inputs and registers necessary information using an input operation button, which is not illustrated, provided in the registered AP apparatus 1-2 may also be used. Registered information is stored in the storage unit 11-2 of the registered AP apparatus 1-2.

When the registered AP apparatus 1-2 which has completed such preliminary processing is connected to a network, authentication registration operation shown in Fig. 20 is performed with the authentication server 6-2.
(1): the controller 10-1 of the registered AP apparatus 1-2 starts the authentication request unit 16 when it detects that the registered AP apparatus 1-2 which has completed preliminary processing is connected to a network. The authentication request unit 16 establishes a session to the authentication server 6-2 based on server connection information and transmits a registration request message (Step S100). The registration request message includes license information, a registered AP apparatus ID and a contract user ID.
(2): the AP authentication unit 63-1 of the authentication server 6-2 compares the license information, the registered AP apparatus ID and the contract user ID which are included in the registration request message received from the registered AP apparatus 1-2 with the information defined at the time of contract and being registered with a contract information database which is not illustrated. When the AP authentication unit 63-1 certifies that there exists a corresponding contract, the AP register unit 62-1 of the authentication server 6-2 sets the contract user table 621 (Step S101). In other words, the certified license information, the registered AP apparatus ID and the contract user ID are set to the contract user table 621.
(3): next, in order to identify bandwidth information which can be used by this AP apparatus, the AP register unit 62-1 notifies the registered AP apparatus 1-2 of all bandwidth information assigned at the time of contract and transmits a radio wave state scan request message which requests to scan and report the radio wave state of each bandwidth (Step S102).
(4) : when the radio wave state scan request message is received, the controller 10-1 of the registered AP apparatus 1-2 starts the radio resource scan unit 18, and instructs to measure the receiving field intensity of the surrounding radio waves in each bandwidth having been notified. A scan result (measurement result of the receiving field intensity) by the radio resource scan unit 18 is reported to the authentication server 6-2 (Step S103).
(5) : the authentication server 6-2 discriminates the surrounding radio wave state of the AP apparatus reported from the registered AP apparatus 1-2 and determines bandwidth information which can be used in this registered AP apparatus 1-2 without being interfered from other AP apparatuses. This determination in the controller 60-1 can be performed, for example, that a bandwidth whose receiving field intensity does not exceed the threshold value of the receiving field intensity set in advance is specified as a usable bandwidth. The determined usable bandwidth information is set to the contract user table 621 (Step S104).
(6): when necessary information has been set to the contract user table 621, the AP register unit 62-1 of the authentication server 6-2 transmits a registration completion notification message to the registered AP apparatus 1-2 (Step 105). At that time, the registration completion notification message includes the usable bandwidth information in this AP apparatus.
(7): the controller 10-1 of the registered AP apparatus 1-2 sets the usable bandwidth information included in the registration completion notification message to the storage unit 11-2 when the registration completion notification message is received from the authentication server 6-2 (Step 106).
(8) : the registered AP apparatus 1-2 connected to the network goes into the operation status after above mentioned operation (Step 107).

As it has been described above, the contract user table is set in the authentication server 6-2 at the time of authentication registration by the authentication server 6-2 which is performed when the registered AP apparatus 1-2 of wireless access system of the fourth embodiment is installed in an IP network. At that time, the radio wave state around the installation site is considered and the bandwidth which can be used in the registered AP apparatus 1-2 is set.

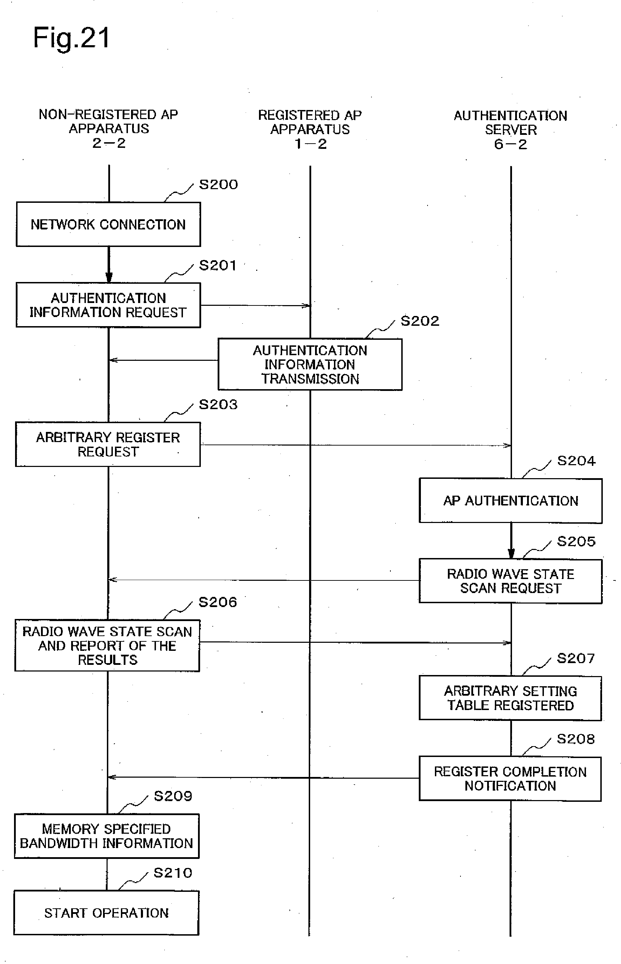

Operation of installing the non-registered AP apparatus 2-2 at the other place, after connecting the registered AP apparatus 1-2 to a network and putting it into the operation status as above, will be described with reference to Fig. 21.

Fig. 21 is a flow chart showing an example of operation at the time of installing the non-registered AP apparatus of wireless access system of the fourth embodiment.

As mentioned above, an address (IP address, for example) of the registered AP apparatus 1-2 is given to the non-registered AP apparatus 2-1 by operating an operation button (not shown) of the non-registered AP apparatus 2-2 in advance, and the non-registered AP apparatus 2-1 is storing it in the authentication information request unit 23.
(1): the network connection unit 22-1 of the non-registered AP apparatus 2-2 starts the authentication information request unit 23 when the non-registered AP apparatus 2-2 is connected to the IP network 51 (Step S200).
(2): the authentication information request unit 23 of the non-registered AP apparatus 2-2 accesses the registered AP apparatus 1-2 for which an IP address has been stored in advance via the network communication units 27-1 and the IP network 51 and performs an acquisition request of authentication information of the registered AP apparatus 1-2 (Step S201).
(3): the authentication information transmission unit 12 of the registered AP apparatus 1-2 transmits the authentication information and the server connection information stored in the storage unit 11-2 to the non-registered AP apparatus 2-2 (Step S202). The authentication information transmitted at that time includes license information, a registered AP apparatus ID and a contract user ID. The controller 20-1 of the non-registered AP apparatus 2-2 stores the acquired authentication information of the registered AP apparatus 1-2 and the server connection information in the storage unit 21-2.
(4): next, the controller 20-1 of the non-registered AP apparatus 2-2, which has confirmed acquisition and storage of the authentication information of the registered AP apparatus 1-2 and the server connection information, begins operation to perform an arbitrary registration request to the authentication server 6-2 (Step S203). The controller 20-1 of the non-registered AP apparatus 2-2 starts the authentication request unit 24-2. The authentication request unit 24-2 establishes a session to the authentication server 6-2 based on the server connection information acquired from the registered AP apparatus 1-2 and transmits an arbitrary registration request message. The arbitrary registration request message includes the license information, the registered AP apparatus ID and the contract user ID acquired from the registered AP apparatus 1-2, and further includes the non-registered AP apparatus ID of this non-registered AP apparatus 2-2.
(5) : The AP authentication unit 63-1 of the authentication server 6-2 performs authentication (AP authentication) of the non-registered AP apparatus 2-2 based on the arbitrary registration request message received from the non-registered AP apparatus 2-2 (Step S204). This AP authentication is performed by comparing the license information, the registered AP apparatus ID and the contract user ID included in the arbitrary registration request message with the information registered on the contract user table 621. In other words, when the license information, the registered AP apparatus ID and the contract user ID included in the arbitrary registration request message corresponds with the license information, the registered AP apparatus ID and the contract user ID registered on the contract user table 621, the non-registered AP apparatus is certified as a proper non-registered AP apparatus. When the AP authentication unit 63-1 certifies that it is a proper non-registered AP apparatus, the AP register unit 62-1 of the authentication server 6-2 sets the arbitrary setting table 622. In other words, the non-registered AP apparatus ID of the certified non-registered AP apparatus 2-2 is set to the arbitrary setting table 622 with the license information, the registered AP apparatus ID and the contract user ID of the corresponding registered AP apparatus 1-2.
(6): next, in order to identify bandwidth information which can be used by this non-registered AP apparatus, the AP register unit 62-1 of the authentication server 6-2 notifies the non-registered AP apparatus 2-2 of all bandwidth information assigned to the contract user at the time of contract and transmits a radio wave state scan request message which requests to scan and report the radio wave state of each bandwidth (Step S205).
(7) : when the radio wave state scan request message is received, the controller 20-1 of the non-registered AP apparatus 2-2 starts the radio resource scan unit 29, and instructs to measure the receiving field intensity of the surrounding radio wave in each bandwidth having been notified. A scan result (measurement result of the receiving field intensity) by the radio resource scan unit 29 is reported to the authentication server 6-2 (Step S206).
(8): the authentication server 6-2 discriminates the surrounding radio wave state of the AP apparatus reported from the non-registered AP apparatus 2-2 and determines bandwidth information which can be used in this non-registered AP apparatus 2-2. This determination in the controller 60-1 can be performed, for example, that a bandwidth whose receiving field intensity does not exceed the threshold value of the receiving field intensity set in advance is specified as a usable bandwidth. The determined usable bandwidth information is set to the arbitrary setting table 622 (Step S207).
(9): when necessary information has been set to the arbitrary setting table 622, the AP register unit 62-1 of the authentication server 6-2 transmits a registration completion notification message to the non-registered AP apparatus 2-2 (Step S208). At that time, the registration completion notification message includes the usable bandwidth information in this non-registered AP apparatus.
(10): the controller 20-1 of the non-registered AP apparatus 2-2 sets the usable bandwidth information included in the registration completion notification message to the storage unit 21-2 when the registration completion notification message is received from the authentication server 6-2 (Step S209).
(11): the non-registered AP apparatus 2-2 connected to the network goes into the operation status after above mentioned operation (Step S210).

As it has been described above, the non-registered AP apparatus 2-2 of wireless access system of the fourth embodiment acquires authentication information and server connection information from the registered AP apparatus 1-2 at the time of installation in which it is connected with a network. Next, authentication is requested to the authentication server 6-2 based on the authentication information and the server connection information acquired from the registered AP apparatus 1-2. In the authentication server 6-2, the non-registered AP apparatus 2-2 is certified by comparing the setting information in the contract user table with the authentication request information. The information relating to the certified non-registered AP apparatus 2-2 is set to the arbitrary setting table in the authentication server 6-2. At that time, the radio wave state around the installation site is considered and a bandwidth which can be used in the non-registered AP apparatus 2-2 is set.

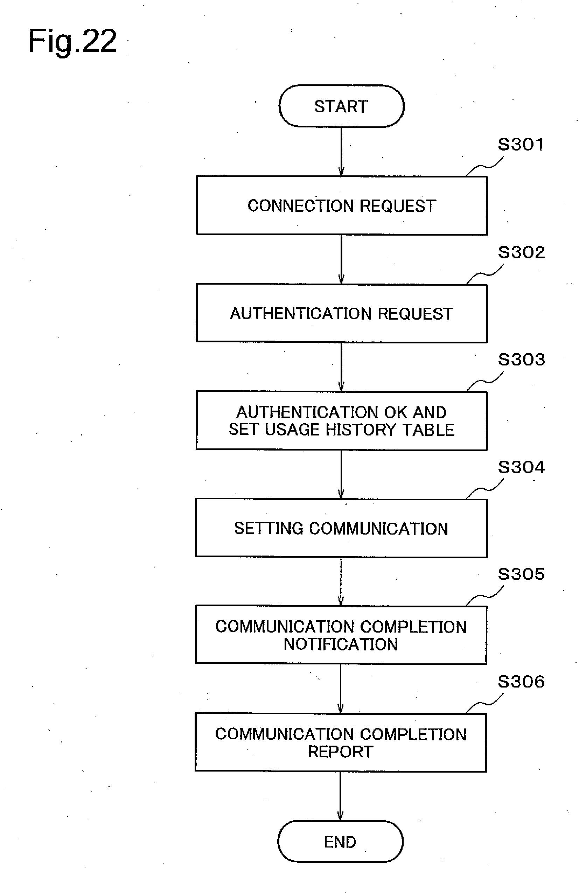

Next, operation under the operation status of the wireless access system of the fourth embodiment using the registered AP apparatus 1-2 and the non-registered AP apparatus 2-2 which are connected to the network and under the operation status as above will be described with reference to Fig. 22.

Fig. 22 is a flow chart showing an example of operation at the time of wireless access system of the fourth embodiment being in the operation status.
(1) : the mobile terminal 4 transmits a connection request at the time of communication via a registered AP apparatus 1-2 or a non-registered AP apparatus 2-2 (Step S301). This connection request includes a terminal ID (user ID) of the mobile terminal for identifying the user.
(2) : the non-registered AP apparatus 2-2 which received a connection request in the terminal communication unit 28-1 starts the authentication request units 24-2, or the registered AP apparatus 1-2 which received a connection request in the terminal communication unit 15-1 starts the authentication request unit 16. The authentication request unit 24-2/16 connects with the authentication server 6-2 using server connection information and transmits an authentication request message corresponding to the connection request (Step S302). In the authentication request message, as authentication request data in addition to the license information and the AP apparatus ID memorized in the AP apparatus, the terminal ID (user ID) of the mobile terminal included in the connection request of the mobile terminal 4 is transmitted to the authentication server 6-2 via the network communication unit 27-1/14-1.
(3) : The AP authentication unit 63-1 of the authentication server 6-2 checks the authentication request data sent from the AP apparatus (the non-registered AP apparatus 2-2 or the registered AP apparatus 1-2) and the contract user table 621 or the arbitrary setting table 622. Specifically, the AP apparatus which is being used for the connection is specified based on the AP apparatus ID. And the license information which corresponds to its AP apparatus ID and set in the contract user table 621 or the arbitrary setting table 6-22 is compared with the license information set in the authentication request data. Next, the AP authentication unit 63-1 sets the usage history table 623 for the certified connection (Step S303). Specifically, it registers a terminal ID of mobile terminal included in the authentication request data as the user ID, and sets the AP apparatus ID of AP apparatus, which is being used for the connection corresponding to the user ID, and the contract user ID of contract user who installed the AP apparatus. The contract user ID can be derived from the contract user table 621 or the arbitrary setting table 622 as information corresponding to the specified AP apparatus ID. And, the time when a use permit notification message is transmitted to the AP apparatus which has transmitted the authentication request message is recorded as the communication start time information. In other words, when an authentication result is affirmative, the use permit notification message is transmitted to the AP apparatus which has transmitted the authentication request message from the use permit notification unit 64-1 of the authentication server 6-2.
(4): the bandwidth allocation unit 25/17 of the AP apparatus (non-registered AP apparatus 2-2 or registered AP apparatus 1-2) assigns a bandwidth which can be used in this AP apparatus to the mobile terminal 4 when the use permit notification information is received. The mobile terminal 4 establishes a session to the destination terminal 7 using the notified bandwidth and begins to communicate (Step S304).
(5) : when communication has completed, the mobile terminal 4 notifies the terminal communication unit 28-1/15-1 of the AP apparatus (non-registered AP apparatus 2-2 or registered AP apparatus 1-2), which is used for the connection, of completion of a call (Step S305).
(6) : the AP apparatus (non-registered AP apparatus 2-2 and registered AP apparatus 1-2), which is used for the connection, transmits a communication completion report message to the authentication server 6-2 from the network communication unit 27-1/14-1 based on the completion of a call (Step S306). The AP apparatus ID and the terminal ID of the mobile terminal (user ID) are included in the communication completion report message. The authentication server 6-2 which has received the communication completion report message searches for the usage history table by the AP apparatus ID and the user ID and registers communication completion time information corresponding to an appropriate user ID.

As understood from the above-mentioned descriptions, the fourth embodiment has an effect in good working efficiency for installation work performed by users when individuals install access point apparatuses of femto cell in a plurality of locations.

This is because that users do not need to perform a registration work of authentication information of newly installed access point apparatus each time for registering the authentication information newly with the authentication server. That is because that the newly installed access point apparatus is provided with a constitution which acquires authentication information of an access point apparatus whose authentication information is registered with an authentication server and accesses the authentication server using the acquired authentication information when it performs authentication.

Further, the fourth embodiment has the effect of preventing radio interference with other femto cell installed near by when a personal femto cell is installed in an arbitrary location.

This is because that it is provided with a constitution which determines a bandwidth to be used after scanning the surrounding radio wave state as a part of the authentication registration operation when an access point apparatus is installed in an arbitrary place. Accordingly, the bandwidth being used by the other AP apparatus near by can be avoided to use although it is a bandwidth assigned at the time of contract, and radio interference can be prevented.

The fourth embodiment has the effect that it can easily grasp the bandwidth usage condition in the service areas of femto cell. This is because that it is provided with a constitution which registers bandwidth information usable by each AP apparatus with the contract user table and the arbitrary setting table. Accordingly, it is possible to know the distribution of bandwidth being used by preparing corresponding information between an installation site of each AP apparatus and address information or building floor information separately.

Further, the fourth embodiment has the effect that the authentication server can easily grasp the usage history of connection.

Because, the AP apparatus used for a connection is provided with a constitution in which it transmits an AP apparatus ID and a terminal ID of the mobile terminal (user ID) to the authentication server by including them in an authentication request message corresponding to a connection request and a communication completion report message which reports whenever communication has completed. In other words, the authentication server is provided with a usage history table, and an AP apparatus ID used for the connection, a contract user ID of the contract user who installed the AP apparatus and start time and completion time of the communication are recorded corresponding to a user ID.

Therefore, it becomes possible to create various kinds of business model for using an AP apparatus installed by a contract user in an arbitrary place by other users. For example, when other users has used the AP apparatus installed by a contract user in an arbitrary place, it may be possible to collect usage fees from other users and gives the usage fees to the contract user as an incentive. Also, it may be possible to compensate the usage fees among contract users when a contract user has used the AP apparatus installed by the other contract user. By creating such business models, it will give individuals incentive to install personal access points in arbitrary locations, and it will result to expand service areas.

While having described an invention of the present application referring to the first to fourth embodiments, the invention of the present application is not limited to the above mentioned embodiments.

This application claims priority from Japanese Patent Application No. 2008-008840, filed on January 18, 2008.

### FIELD OF INDUSTRIAL APPLICATION

A wireless access system, a wireless access method and an access point apparatus according to the present invention can be applied to an access network which connects mobile communication terminals to a backbone network of mobile communication.

## Claims

1. A wireless access system comprising:
an authentication server (5A, 6);
a first access point apparatus (1A, 1) arranged to store authentication information that authenticates the first access point apparatus (1A, 1) to the authentication server (5A, 6); and
a second access point apparatus (2A, 2) arranged: i) to access said first access point apparatus (1A, 1) based on an address stored in advance, ii) to acquire and store said authentication information from said first access point apparatus (1A, 1), and iii) to transmit said authentication information to a network (4A, 5) when requesting an authentication;
wherein the authentication server (5A, 6) is arranged to authenticate said second access point apparatus (2A, 2) based on said authentication information received from said second access point apparatus (2A, 2) via said network and based on authentication information of said first access point apparatus (1A, 1) stored in advance in said authentication server

2. The wireless access system according to claim 1, wherein said second access point apparatus (2A, 2) further comprising:
an authentication information request unit (11A, 23), which transmits an acquisition request for said authentication information to said first access point apparatus (1A, 1);
a first storage unit (12A, 21, 21-1), which stores said authentication information acquired according to said acquisition request; and
a transmitting unit (13A, 24, 24-1), which transmits said authentication information stored in said first storage unit (12A, 21, 21-1) to said authentication server (5A, 6) via said network when requesting an authentication.

3. The wireless access system according to claim 1 or 2, wherein said first access point apparatus (1A, 1) further comprising:
a second storage unit (11, 11-1, 11-2), which stores said authentication information; and
an authentication information transmission unit (12), which transmits said authentication information stored in said second storage unit (11, 11-1, 11-2) to said second access point apparatus (2A, 2) in response to receiving said acquisition request for said authentication information from said second access point apparatus (2A, 2) via said network.

4. A wireless access method for wirelessly accessing an access point apparatus via a network comprising:
storing in advance, in a second access point apparatus (2A, 2), an address of a first access point apparatus (1A, 1), which stores authentication information that authenticates the first access point apparatus (1A, 1) to an authentication server (5A, 6);
accessing, by said second access point apparatus (2A, 2), said first access point apparatus (1A, 1) based on said address, acquiring and storing said authentication information from said first access point apparatus;
transmitting, by said second access point apparatus (2A, 2) when authenticating, said authentication information stored in said second access point apparatus (2A, 2) to the authentication server; and
authenticating, by said authentication server (5A, 6) receiving said authentication information from said second access point apparatus (2A, 2) via said network and storing in advance authentication information of said first access point apparatus (1A, 1), said second access point apparatus (2A, 2) based on said received authentication information and said stored in advance authentication information of said first access point apparatus (1A, 1).

5. The wireless access method according to claim 4, **characterized in that** said authentication information includes: license information for authenticating said first access point apparatus (1A, 1); and bandwidth information on a bandwidth assigned to a mobile terminal (3), which uses said first access point (1A, 1), said method further comprising:
assigning said bandwidth, indicated by said bandwidth information included in said authentication information, to said mobile terminal (3), which uses the first access point apparatus, when receiving authentication success information indicating that said first access point apparatus (1A, 1) has authenticated, from said authentication server (5A, 6).

6. The wireless access method according to claim 4, wherein said authentication information includes: license information for certifying said first access point apparatus (1A, 1); first apparatus identification information for identifying said first access point apparatus (1A, 1) and contract user identification information for identifying a user, who installs said first access point apparatus (1A, 1), and wherein
said authentication server (5A, 6) includes a contract user table for each of said first access point apparatus (1A, 1), the contact user table registering: said contract user identification information; said license information; and said first apparatus identification information, and being configured when said first access point apparatus (1A, 1) is authenticated on connecting to the network, said method comprising:
transmitting second apparatus identification information, for identifying said second access point apparatus (2A, 2), from said second access point apparatus (2A, 2) to said authentication server (5A, 6), in addition to said authentication information acquired from said first access point apparatus (1A, 1), when requesting an authentication on connecting said second access point apparatus (2A, 2) to the network;
comparing, in said authentication server (5A, 6), said authentication information received from said second access point apparatus (2A, 2) with said registered information in said contract user table; and
configuring, in said authentication server (5A, 6), an arbitrarily configured table including: said second apparatus identification information; said contract user identification information; and said license information, for said second access point apparatus (2A, 2), which has been authenticated by comparing said authentication information.

7. An access point (1) apparatus comprising:
a storage unit (11, 11-1, 11-2), which stores authentication information that authenticates the access point (1A, 1) to an authentication server (5A, 6); and
an authentication information transmission unit (12), which transmits said authentication information stored in said storage unit (11, 11-1, 11-2), to other access point apparatus (2A, 2), in response to receiving an acquisition request from said other access point apparatus (2A, 2) via a network (5).

8. The access point apparatus according to claim 7, **characterized in that**
said authentication information includes: license information for authenticating said other access point apparatus (2A, 2); and bandwidth information on a bandwidth assigned to a mobile terminal (4) which uses said other access point apparatus.

9. The access point apparatus according to claim 8, **characterized in that**
said access point apparatus (1A, 1), when receiving communication history information from said other access point apparatus (2A, 2), accumulates said communication history information in said storage unit, said communication history information indicating usage history of bandwidth assigned to said mobile terminal (4), and transmits periodically said communication history information to an authentication server (5A, 6), which authenticates said other access point apparatus (2A, 2).

10. The access point apparatus according to claim 7, further comprising:
a radio resource scan unit (18), which scans a receiving state for radio waves in a first bandwidth assigned by said authentication server (5A, 6), at which the access point apparatus is installed, when the access point apparatus is authenticated on connecting to the network, and transmits said scanned receiving state for the radio waves in said first bandwidth to said authentication server (5A, 6); and
a bandwidth allocation unit (17), which assigns a second bandwidth to a mobile terminal, which uses the access point apparatus based on usable bandwidth information indicated by said authentication server (5A, 6).

## Patentansprüche

1. Drahtloszugangssystem, das aufweist:
einen Authentifizierungsserver (5A, 6);
eine erste Zugangspunktvorrichtung (1A, 1), die eingerichtet ist, um Authentifizierungsinformationen zu speichern, die die erste Zugangspunktvorrichtung (1A, 1) an dem Authentifizierungsserver (5A, 6) authentifizieren; und
eine zweite Zugangspunktvorrichtung (2A, 2), die eingerichtet ist, um: i) basierend auf einer im Voraus gespeicherten Adresse auf die erste Zugangspunktvorrichtung (1A, 1) zuzugreifen, ii) die Authentifizierungsinformationen von der ersten Zugangspunktvorrichtung (1A, 1) zu erlangen und zu speichern, und iii) die Authentifizierungsinformationen an ein Netzwerk (4A, 5) zu übertragen, wenn eine Authentifizierung angefordert wird;
wobei der Authentifizierungsserver (5A, 6) eingerichtet ist, um die zweite Zugangsvorrichtung (2A, 2) basierend auf den Authentifizierungsinformationen, die von der zweiten Zugangspunktvorrichtung (2A, 2) über das Netzwerk empfangen werden, und basierend auf Authentifizierungsinformationen der ersten Zugangspunktvorrichtung (1A, 1), die im Voraus in dem Authentifizierungsserver gespeichert werden, zu authentifizieren.

2. Drahtloszugangssystem nach Anspruch 1, wobei die zweite Zugangspunktvorrichtung (2A, 2) ferner aufweist:
eine Authentifizierungsinformations-Anforderungseinheit (11A, 23), die eine Anfrage zur Erlangung der Authentifizierungsinformationen an die erste Zugangspunktvorrichtung (1A, 1) überträgt;
eine erste Speichereinheit (12A, 21, 21-1), die die gemäß der Erlangungsanfrage erlangten Authentifizierungsinformationen speichert; und
eine Übertragungseinheit (13A, 24, 24-1), die die in der ersten Speichereinheit (12A, 21, 21-1) gespeicherten Authentifizierungsinformationen über das Netzwerk an den Authentifizierungsserver (5A, 6) überträgt, wenn eine Authentifizierung angefordert wird.

3. Drahtloszugangssystem nach Anspruch 1 oder 2, wobei die erste Zugangspunktvorrichtung (1A, 1) ferner aufweist:
eine zweite Speichereinheit (11, 11-1, 11-2), die die Authentifizierungsinformationen speichert; und
eine Authentifizierungsinformationen-Übertragungseinheit (12), die die Authentifizierungsinformationen, die in der zweiten Speichereinheit (11, 11-1, 11-2) gespeichert sind, ansprechend auf den Empfang der Anfrage zur Erlangung der Authentifizierungsinformationen von der zweiten Zugangspunktvorrichtung (2A, 2) über das Netzwerk an die zweite Zugangspunktvorrichtung (2A, 2) überträgt.

4. Drahtloszugangsverfahren zum drahtlosen Zugreifen auf eine Zugangspunktvorrichtung über ein Netzwerk, das aufweist:
im Voraus Speichern einer Adresse einer ersten Zugangspunktvorrichtung (1A, 1), die Authentifizierungsinformationen speichert, welche die erste Zugangspunktvorrichtung (1A, 1) bei einem Authentifizierungsserver (5A, 6) authentifizieren, in einer zweiten Zugangspunktvorrichtung (2A, 2);
Zugreifen auf die erste Zugangspunktvorrichtung (1A, 1) durch die zweite Zugangspunktvorrichtung (2A, 2) basierend auf der Adresse, Erlangen und Speichern der Authentifizierungsinformationen von der ersten Zugangspunktvorrichtung;
Übertragen der Authentifizierungsinformationen, die in der zweiten Zugangspunktvorrichtung (2A, 2) gespeichert sind, an den Authentifizierungsserver durch die zweite Zugangspunktvorrichtung (2A, 2), wenn sie authentifiziert, und
Authentifizieren durch den Authentifizierungsserver (5A, 6), der die Authentifizierungsinformationen von der zweiten Zugangspunktvorrichtung (2A, 2) über das Netzwerk empfängt, und im Voraus Speichern von Authentifizierungsinformationen der ersten Zugangspunktvorrichtung (1A, 1), der zweiten Zugangspunktvorrichtung (2A, 2) basierend auf den empfangenen Authentifizierungsinformationen und den im Voraus gespeicherten Authentifizierungsinformationen der ersten Zugangspunktvorrichtung (1A, 1).

5. Drahtloszugangsverfahren nach Anspruch 4, **dadurch gekennzeichnet, dass**
die Authentifizierungsinformationen umfassen: Lizenzinformationen zum Authentifizieren der ersten Zugangspunktvorrichtung (1A, 1); und Bandbreiteninformationen über eine Bandbreite, die einem mobilen Endgerät (3) zugewiesen ist, das den ersten Zugangspunkt (1A, 1) verwendet, wobei das Verfahren ferner aufweist:
Zuweisen der Bandbreite, die durch die Bandbreiteninformationen angezeigt wird, die in den Authentifizierungsinformationen enthalten sind, an das mobile Endgerät (3), das die erste Zugangspunktvorrichtung verwendet, wenn Authentifizierungserfolgsinformationen von dem Authentifizierungsserver (5A, 6) empfangen werden, die anzeigen, dass die erste Zugangspunktvorrichtung (1A, 1) authentifiziert wurde.

6. Drahtloszugangsverfahren nach Anspruch 4, wobei die Authentifizierungsinformationen umfassen: Lizenzinformationen zum Bestätigen der ersten Zugangspunktvorrichtung (1A, 1); erste Vorrichtungsidentifizierungsinformationen zum Identifizieren der ersten Zugangspunktvorrichtung (1A, 1) und Vertragsbenutzeridentifizierungsinformationen zum Identifizieren eines Benutzers, der die erste Zugangspunktvorrichtung (1A, 1) installiert, und wobei
der Authentifizierungsserver (5A, 6) eine Vertragsbenutzertabelle für jede der ersten Zugangspunktvorrichtungen (1A, 1) aufweist, wobei die Vertragsbenutzertabelle registriert: die Vertragsbenutzeridentifizierungsinformationen, die Lizenzinformationen und die ersten Vorrichtungsidentifizierungsinformationen, und konfiguriert wird, wenn die erste Zugangspunktvorrichtung (1A, 1) beim Verbinden auf dem Netzwerk authentifiziert wird, wobei das Verfahren aufweist:
Übertragen der zweiten Vorrichtungsidentifizierungsinformationen zum Identifizieren der zweiten Zugangspunktvorrichtung (2A, 2) von der zweiten Zugangspunktvorrichtung (2A, 2) an den Authentifizierungsserver (5A, 6) neben den Authentifizierungsinformationen, die von der ersten Zugangspunktvorrichtung (1A, 1) erlangt werden, wenn beim Verbinden der zweiten Zugangspunktvorrichtung (2A, 2) mit dem Netzwerk eine Authentifizierung angefordert wird;
Vergleichen der Authentifizierungsinformationen, die von der zweiten Zugangspunktvorrichtung (2A, 2) empfangen werden, mit den registrierten Informationen in der Vertragsbenutzertabelle in dem Authentifizierungsserver (5A, 6); und
Konfigurieren einer beliebig konfigurierten Tabelle für die zweite Zugangspunktvorrichtung (2A, 2), die durch Vergleichen der Authentifizierungsinformationen authentifiziert wurde, in dem Authentifizierungsserver (5A, 6), die umfasst: die zweiten Vorrichtungsidentifizierungsinformationen, die Vertragsbenutzeridentifizierungsinformationen und die Lizenzinformationen.

7. Zugangspunktvorrichtung (1), die aufweist:
eine Speichereinheit (11, 11-1, 11-2), die Authentifizierungsinformationen, die den Zugangspunkt (1a, 1) bei einem Authentifizierungsserver (5A, 6) authentifizieren, speichert; und
eine Authentifizierungsinformationen-Übertragungseinheit (12), die die Authentifizierungsinformationen, die in der Speichereinheit (11, 11-1, 11-2) gespeichert sind, ansprechend auf den Empfang einer Erlangungsanfrage von der anderen Zugangspunktvorrichtung (2A, 2) über das Netzwerk an die andere Zugangspunktvorrichtung (2A, 2) überträgt.

8. Zugangspunktvorrichtung nach Anspruch 7, **dadurch gekennzeichnet, dass** die Authentifizierungsinformationen umfassen: Lizenzinformationen zum Authentifizieren der anderen Zugangspunktvorrichtung (2A, 2); und Bandbreiteninformationen über eine Bandbreite, die einem mobilen Endgerät (4) zugewiesen ist, das die andere Zugangspunktvorrichtung (2A, 2) verwendet.

9. Zugangspunktvorrichtung nach Anspruch 8, **dadurch gekennzeichnet, dass** die Zugangspunktvorrichtung (1A, 1), wenn sie Kommunikationshistorieninformationen von der anderen Zugangspunktvorrichtung (2A, 2) empfängt, die Kommunikationshistorieninformationen in der Speichereinheit sammelt, wobei die Kommunikationshistorieninformationen die Nutzungshistorie der Bandbreite, die dem mobilen Endgerät (4) zugewiesen wurde, anzeigen, und regelmäßig die Kommunikationshistorieninformationen an einen Authentifizierungsserver (5A, 6) überträgt, der die andere Zugangspunktvorrichtung (2A, 2) authentifiziert.

10. Zugangspunktvorrichtung nach Anspruch 7, die ferner aufweist:
eine Funkressourcenabtasteinheit (18), die einen Empfangszustand für Funkwellen in einer von dem Authentifizierungsserver (5A, 6) zugewiesen ersten Bandbreite, bei welcher die Zugangspunktvorrichtung installiert ist, abtastet, wenn die Zugangspunktvorrichtung beim Verbinden mit dem Netzwerk authentifiziert wird, und den abgetasteten Empfangszustand für die Funkwellen in der ersten Bandbreite an den Authentifizierungsserver (5A, 6) überträgt; und
eine Bandbreitenzuweisungseinheit (17), die eine zweite Bandbreite an ein mobiles Endgerät, das die Zugangspunktvorrichtung verwendet, basierend auf verwendbaren Bandbreiteinformationen, die von dem Authentifizierungsserver (5A, 6) angegeben werden, zuweist.

## Revendications

1. Système d'accès sans fil comprenant :
un serveur d'authentification (5A, 6) ;
un premier appareil de point d'accès (1A, 1) conçu pour stocker des informations d'authentification qui authentifient le premier appareil de point d'accès (1A, 1) auprès du serveur d'authentification (5A, 6) ; et
un second appareil de point d'accès (2A, 2) conçu : i) pour accéder audit premier appareil de point d'accès (1A, 1) sur la base d'une adresse stockée à l'avance, ii) pour acquérir et stocker lesdites informations d'authentification provenant dudit premier appareil de point d'accès (1A, 1), et iii) pour transmettre lesdites informations d'authentification à un réseau (4A, 5) lors d'une demande d'authentification ;
dans lequel le serveur d'authentification (5A, 6) est conçu pour authentifier ledit second appareil de point d'accès (2A, 2) sur la base desdites informations d'authentification reçues en provenance dudit second appareil de point d'accès (2A, 2) via ledit réseau et sur la base d'informations d'authentification dudit premier appareil de point d'accès (1A, 1) stockées à l'avance dans ledit serveur d'authentification.

2. Système d'accès sans fil selon la revendication 1, dans lequel ledit second appareil de point d'accès (2A, 2) comprenant en outre :
une unité de demande d'informations d'authentification (11A, 23), qui transmet une demande d'acquisition desdites informations d'authentification audit premier appareil de point d'accès (1A, 1) ;
une première unité de stockage (12A, 21, 21-1), qui stocke lesdites informations d'authentification acquises selon ladite demande d'acquisition ; et
une unité de transmission (13A, 24, 24-1), qui transmet lesdites informations d'authentification stockées dans ladite première unité de stockage (12A, 21, 21-1) audit serveur d'authentification (5A, 6) via ledit réseau lors d'une demande d'authentification.

3. Système d'accès sans fil selon la revendication 1 ou 2, dans lequel ledit premier appareil de point d'accès (1A, 1) comprenant en outre :
une seconde unité de stockage (11, 11-1, 11-2), qui stocke lesdites informations d'authentification ; et
une unité de transmission d'informations d'authentification (12), qui transmet lesdites informations d'authentification stockées dans ladite seconde unité de stockage (11, 11-1, 11-2) audit second appareil de point d'accès (2A, 2) en réponse à la réception de ladite demande d'acquisition desdites informations d'authentification en provenance dudit second appareil de point d'accès (2A, 2) via ledit réseau.

4. Procédé d'accès sans fil pour accéder sans fil à un appareil de point d'accès via un réseau comprenant :
le stockage à l'avance, dans un second appareil de point d'accès (2A, 2), d'une adresse d'un premier appareil de point d'accès (1A, 1), qui stocke des informations d'authentification qui authentifient le premier appareil de point d'accès (1A, 1) auprès d'un serveur d'authentification (5A, 6) ;
l'accès, par ledit second appareil de point d'accès (2A, 2), audit premier appareil de point d'accès (1A, 1) sur la base de ladite adresse, l'acquisition et le stockage desdites informations d'authentification provenant dudit premier appareil de point d'accès ;
la transmission, par ledit second appareil de point d'accès (2A, 2) lors d'une authentification, desdites informations d'authentification stockées dans ledit second appareil de point d'accès (2A, 2) au serveur d'authentification ; et
l'authentification, par ledit serveur d'authentification (5A, 6) recevant lesdites informations d'authentification en provenance dudit second appareil de point d'accès (2A, 2) via ledit réseau et stockant à l'avance des informations d'authentification dudit premier appareil de point d'accès (1A, 1), dudit second appareil de point d'accès (2A, 2) sur la base desdites informations d'authentification reçues et desdites informations d'authentification stockées à l'avance dudit premier appareil de point d'accès (1A, 1).

5. Procédé d'accès sans fil selon la revendication 4, **caractérisé en ce que**
lesdites informations d'authentification comportent : des informations de licence pour authentifier ledit premier appareil de point d'accès (1A, 1) ; et des informations de bande passante sur une bande passante attribuée à un terminal mobile (3), qui utilise ledit premier point d'accès (1A, 1), ledit procédé comprenant en outre :
l'attribution de ladite bande passante, indiquée par lesdites informations de bande passante incluses dans lesdites informations d'authentification, audit terminal mobile (3), qui utilise le premier appareil de point d'accès, lors de la réception d'informations de succès d'authentification indiquant que ledit premier appareil de point d'accès (1A, 1) a été authentifié, en provenance dudit serveur d'authentification (5A, 6).

6. Procédé d'accès sans fil selon la revendication 4, dans lequel lesdites informations d'authentification comportent : des informations de licence pour certifier ledit premier appareil de point d'accès (1A, 1) ; des premières informations d'identification d'appareil pour identifier ledit premier appareil de point d'accès (1A, 1) et des informations d'identification d'utilisateur de contrat pour identifier un utilisateur, qui installe ledit premier appareil de point d'accès (1A, 1), et dans lequel
ledit serveur d'authentification (5A, 6) comporte un tableau d'utilisateur de contrat pour chacun dudit premier appareil de point d'accès (1A, 1), le tableau d'utilisateur de contrat enregistrant : lesdites informations d'identification d'utilisateur de contrat ; lesdites informations de licence ; et lesdites premières informations d'identification d'appareil, et étant configuré lorsque ledit premier appareil de point d'accès (1A, 1) est authentifié lors d'une connexion au réseau, ledit procédé comprenant :
la transmission de secondes informations d'identification d'appareil, pour identifier ledit second appareil de point d'accès (2A, 2), dudit second appareil de point d'accès (2A, 2) audit serveur d'authentification (5A, 6), en plus desdites informations d'authentification acquises auprès dudit premier appareil de point d'accès (1A, 1), lors d'une demande d'authentification lors d'une connexion dudit second appareil de point d'accès (2A, 2) au réseau ;
la comparaison, dans ledit serveur d'authentification (5A, 6), desdites informations d'authentification reçues en provenance dudit second appareil de point d'accès (2A, 2) avec lesdites informations enregistrées dans ledit tableau d'utilisateur de contrat ; et
la configuration, dans ledit serveur d'authentification (5A, 6), d'un tableau configuré arbitrairement comportant : lesdites secondes informations d'identification d'appareil ; lesdites informations d'identification d'utilisateur de contrat ; et lesdites informations de licence, pour ledit second appareil de point d'accès (2A, 2), qui a été authentifié par comparaison desdites informations d'authentification.

7. Appareil de point d'accès (1) comprenant :
une unité de stockage (11, 11-1, 11-2), qui stocke des informations d'authentification qui authentifient le point d'accès (1A, 1) auprès d'un serveur d'authentification (5A, 6) ; et
une unité de transmission d'informations d'authentification (12), qui transmet lesdites informations d'authentification stockées dans ladite unité de stockage (11, 11-1, 11-2), à un autre appareil de point d'accès (2A, 2), en réponse à la réception d'une demande d'acquisition provenant dudit autre appareil de point d'accès (2A, 2) via un réseau (5).

8. Appareil de point d'accès selon la revendication 7, **caractérisé en ce que**
lesdites informations d'authentification comportent : des informations de licence pour authentifier ledit autre appareil de point d'accès (2A, 2) ; et des informations de bande passante sur une bande passante attribuée à un terminal mobile (4) qui utilise ledit autre appareil de point d'accès.

9. Appareil de point d'accès selon la revendication 8, **caractérisé en ce que**
ledit appareil de point d'accès (1A, 1), lors de la réception d'informations d'historique de communication en provenance dudit autre appareil de point d'accès (2A, 2), accumule lesdites informations d'historique de communication dans ladite unité de stockage, lesdites informations d'historique de communication indiquant un historique d'utilisation de bande passante attribuée audit terminal mobile (4), et transmet périodiquement lesdites informations d'historique de communication à un serveur d'authentification (5A, 6), qui authentifie ledit autre appareil de point d'accès (2A, 2).

10. Appareil de point d'accès selon la revendication 7, comprenant en outre :
une unité de balayage de ressources radio (18), qui balaie un état de réception pour des ondes radio dans une première bande passante attribuée par ledit serveur d'authentification (5A, 6), au niveau duquel l'appareil de point d'accès est installé, lorsque l'appareil de point d'accès est authentifié lors d'une connexion au réseau, et transmet ledit état de réception balayé pour les ondes radio dans ladite première bande passante audit serveur d'authentification (5A, 6) ; et
une unité d'allocation de bande passante (17), qui attribue une seconde bande passante à un terminal mobile, qui utilise l'appareil de point d'accès sur la base d'informations de bande passante utilisables indiquées par ledit serveur d'authentification (5A, 6).
